# EUROPEAN PATENT APPLICATION

(11) **EP 3 203 722 A1**
(43) Date of publication of application: **09.08.2017**
(21) Application number: 15847223.3
(22) Date of filing: 28.09.2015
(51) Int. Cl.: H04N 5/225, H04N 5/341, H04N 5/91

(54) **ELECTRONIC APPARATUS AND IMAGE PROCESSING METHOD**

(30) Priority: 30.09.2014 JP 2014202286
(71) Applicant: Nikon Corporation, Tokyo 108-6290 (JP)
(72) Inventor: MIYAKAWA, Yoshiaki, Tokyo 108-6290 (JP); YAMAGATA, Naoki, Tokyo 108-6290 (JP)
(74) Representative: Hoffmann Eitle
(86) International application number: PCT/JP2015/077384
(87) International publication number: WO 2016/052437

(57) **Abstract**

An electronic device, includes an input unit that inputs image data generated by an imaging unit that has a plurality of imaging regions with imaging conditions being different for each of the imaging regions, and data of the imaging conditions for each of the imaging regions; and an image processing unit that performs image processing upon the image data inputted from the input unit based on the imaging conditions for each of the imaging regions.

## Description

### TECHNICAL FIELD

The present invention relates to an electronic device and to an image processing method.

### BACKGROUND ART

An electronic device that is provided with an image sensor in which an image capturing chip of the backside illumination type and a signal processing chip are laminated together (hereinafter termed a laminated type image sensor) has been per se proposed (refer to Patent Document #1). In such a laminated type image sensor, the image capturing chip of the backside illumination type and the signal processing chip are laminated together so as to be connected together at each of predetermined regions via micro bumps.

### CITATION LIST

### PATENT LITERATURE

Patent Document #1: Japanese Laid-Open Patent Publication 2006-49361.

### SUMMARY OF INVENTION

### TECHNICAL PROBLEM

With an electronic device incorporating such a prior art laminated type image sensor, there have not been many proposals for dividing an image into imaging regions having one, or two or more, of the regions described above so as to acquire captured images for each of those imaging regions, and it cannot be said that the convenience of use of the electronic devices that incorporate laminated type image sensors has been satisfactory.

### SOLUTION TO PROBLEM

According to the first aspect of the present invention, an electronic device, comprises: an input unit that inputs image data generated by an imaging unit that has a plurality of imaging regions with imaging conditions being different for each of the imaging regions, and data of the imaging conditions for each of the imaging regions; and an image processing unit that performs image processing upon the image data inputted from the input unit based on the imaging conditions for each of the imaging regions.

According to the second aspect of the present invention, in the electronic device according to the first aspect, it is preferred that if, among the plurality of imaging regions, the imaging conditions for a first imaging region and the imaging conditions for a second imaging region are different, the image processing unit performs image processing of the image data generated from the first imaging region and image processing of the image data generated from the second imaging region differently.

According to the third aspect of the present invention, in the electronic device according to the second aspect, it is preferred that the image processing unit makes parameters for the image processing of the image data generated from the first imaging region and parameters for the image processing of the image data generated from the second imaging region be different.

According to the fourth aspect of the present invention, in the electronic device according to any one of the first through third aspects, it is preferred that the image data generated by the imaging unit and the data of the imaging conditions for each imaging region are recorded by a recording unit; and the input unit inputs the image data and the data of the imaging conditions for each imaging region from the recording unit.

According to the fifth aspect of the present invention, an electronic device, comprises: an input unit that, from a recording unit in which image data generated by an imaging unit that has a plurality of imaging regions with imaging conditions being different for each of the imaging regions, and data of imaging conditions set for each of the imaging regions, are recorded in correspondence with data of position information for each of the imaging regions of the imaging unit, inputs the image data and the data of the imaging conditions for each imaging region; and an image processing unit that performs image processing upon the image data inputted from the input unit under the imaging conditions for each of the imaging regions.

According to the sixth aspect of the present invention, an electronic device, comprises: an input unit that, from a recording unit in which image data generated by an imaging unit that has a plurality of imaging regions with imaging conditions being different for each of the imaging regions, and data of the imaging conditions set for each of the imaging regions, are recorded in a configuration corresponding to data of position information for each of the imaging regions of the imaging unit, inputs the image data and the data of the imaging conditions set for each of the imaging regions; and an image processing unit that performs image processing upon the image data of the imaging regions inputted from the input unit under the imaging conditions for each of the imaging regions.

According to the seventh aspect of the present invention, in the electronic device according to any one of the first through sixth aspects, it is preferred that the image processing unit performs at least one of demosaicing processing, noise reduction processing, color adjustment processing, and brightness adjustment processing.

According to the eighth aspect of the present invention, in the electronic device according to the seventh aspect, it is preferred that the imaging unit includes an amplification unit for each imaging region, that amplifies signal generated by electric charge that has been generated by photoelectric conversion; the imaging conditions are amplification ratios of the amplification units; and the image processing unit performs noise alleviation processing based on the amplification ratios.

According to the ninth aspect of the present invention, in the electronic device according to any one of the first through eighth aspects, it is preferred that the imaging regions have pixel groups that include at least one pixel, and imaging conditions can be set for each pixel group; the data of the imaging conditions inputted from the input unit is data of the imaging conditions for each pixel group; and the image processing unit performs image processing of the image data according to the data of the imaging conditions for each pixel group as imaging conditions for each imaging region.

According to the tenth aspect of the present invention, in the electronic device according to the first aspect, it is preferred that the image data is RAW data; and the image processing unit develops the RAW data based on the imaging conditions for each imaging region.

According to the eleventh aspect of the present invention, in the electronic device according to the tenth aspect, it is preferred that the image processing unit develops the RAW data based on a distribution diagram of imaging conditions that specifies the imaging conditions for each imaging region.

According to the twelfth aspect of the present invention, in the electronic device according to the tenth aspect, it is preferred that the image processing unit develops the RAW data based on a correction amount map generated based on a distribution diagram of the imaging conditions.

According to the thirteenth aspect of the present invention, in the electronic device according to the twelfth aspect, it is preferred that the electronic device further comprises a generation unit that generates the correction amount map based on the distribution diagram of the imaging conditions.

According to the fourteenth aspect of the present invention, in the electronic device according to any one of the tenth through thirteenth aspects, it is preferred that the RAW data is corrected so as to be a predetermined range recording is performed.

According to the fifteenth aspect of the present invention, in the electronic device according to the fourteenth aspect, it is preferred that the RAW data is corrected based on the predetermined range.

According to the sixteenth aspect of the present invention, in the electronic device according to the thirteenth aspect, it is preferred that the electronic device further comprises a measurement unit that measures the imaging conditions for each of the plurality of imaging regions; and wherein, as the correction amount map, the generation unit generates a calculated correction amount map so that, at least one measured value, among the imaging conditions measured by the measurement unit for the plurality of imaging regions, is within a predetermined range.

According to the seventeenth aspect of the present invention, in the electronic device according to any one of the first through sixteenth aspects, it is preferred that the data of the imaging conditions includes information related to exposure when an image of the photographic subject is captured by the imaging unit.

According to the eighteenth aspect of the present invention, in the electronic device according to any one of the first through seventeenth aspects, it is preferred that the data of the imaging conditions includes information related to brightness of the photographic captured by the imaging unit.

According to the ninteenth aspect of the present invention, in the electronic device according to any one of the first through seventeenth aspects, it is preferred that the data of the imaging conditions includes information related to movement of the imaging unit during image capturing.

According to the twentieth aspect of the present invention, in the electronic device according to any one of the first through ninteenth aspects, it is preferred that the imaging condition data includes information related to luminance of the photographic subject captured by the imaging unit.

According to the twenty-first aspect of the present invention, in the electronic device according to any one of the first through twentieth aspects, it is preferred that the imaging regions include photoelectric conversion sections that accumulate electric charge that has been generated by photoelectric conversion; and the data of the imaging conditions includes the time periods for electric charge accumulation by the photoelectric conversion sections.

According to the twenty-second aspect of the present invention, in the electronic device according to any one of the first through twenty-first aspects, it is preferred that the imaging unit includes, for each imaging region, an amplification unit that amplifies the signal generated by electric charge that has been photoelectrically converted; and the data of the imaging conditions includes the amplification ratios of the amplification units.

According to the twenty-third aspect of the present invention, an image processing method, comprises: inputting image data generated by an imaging unit that has a plurality of imaging regions with imaging conditions being different for each of the imaging regions, and data of the imaging conditions for each of the imaging regions; and performing image processing upon the inputted image data under the imaging conditions for each of the imaging regions.

According to the twenty-fourth aspect of the present invention, an image processing method, comprises: inputting image data generated by an imaging unit that has pixel groups including at least one pixel with imaging conditions being different for each of the pixel groups, and the data of the imaging conditions for each of the pixel groups; and performing image processing upon the inputted image data under the imaging conditions for each of the pixel groups.

### BRIEF DESCRIPTION OF DRAWINGS

Fig. 1 is a block diagram showing the structure of an image capturing device according to a first embodiment of the present invention;
Fig. 2 shows plan views schematically showing an imaging surface of an image sensor;
Fig. 3 is a schematic figure showing the structure of an image file according to the first embodiment;
Fig. 4 shows figures for explanation of a still image capture function A;
Fig. 5 is a schematic figure showing the structure of an image file generated when an image has been captured using the still image capture function A;
Fig. 6 shows figures for explanation of a video image capture function A;
Fig. 7 is a schematic figure showing the structure of an image file generated when an image has been captured using the video image capture function A;
Fig. 8 shows figures for explanation of a still image capture function B;
Fig. 9 shows figures showing an example of the layout of a large group;
Fig. 10 is a schematic figure showing the structure of an image file generated when an image has been captured using the still image capture function B;
Fig. 11 is a figure for explanation of a video image capture function B;
Fig. 12 is another figure for explanation of the video image capture function B;
Fig. 13 is a schematic figure showing the structure of an image file generated when an image has been captured using the video image capture function B;
Fig. 14 is a figure for explanation of a mixed image capture function;
Fig. 15 is a schematic figure showing the structure of an image file generated when an image has been captured using the mixed image capture function;
Fig. 16 is a figure schematically showing a directory structure on a memory card according to a second embodiment;
Fig. 17 is a schematic figure showing the structure of a file according to the second embodiment;
Fig. 18 is another schematic figure showing the structure of a file according to the second embodiment;
Fig. 19 is an explanatory figure for a second variation;
Fig. 20 is an explanatory figure for a third variation;
Fig. 21 is an explanatory figure for a fourth variation;
Fig. 22 is an explanatory figure for a seventh variation;
Fig. 23 is a sectional view of a laminated type image sensor;
Fig. 24 is a figure for explanation of a pixel array and blocks upon an image capturing chip;
Fig. 25 is a circuit diagram corresponding to a unit upon the image capturing chip;
Fig. 26 is a block diagram showing the functional structure of the image sensor; and
Fig. 27 shows figures for explanation of image capture processing performed by a control unit 23.

### DESCRIPTION OF EMBODIMENTS

### - First Embodiment -

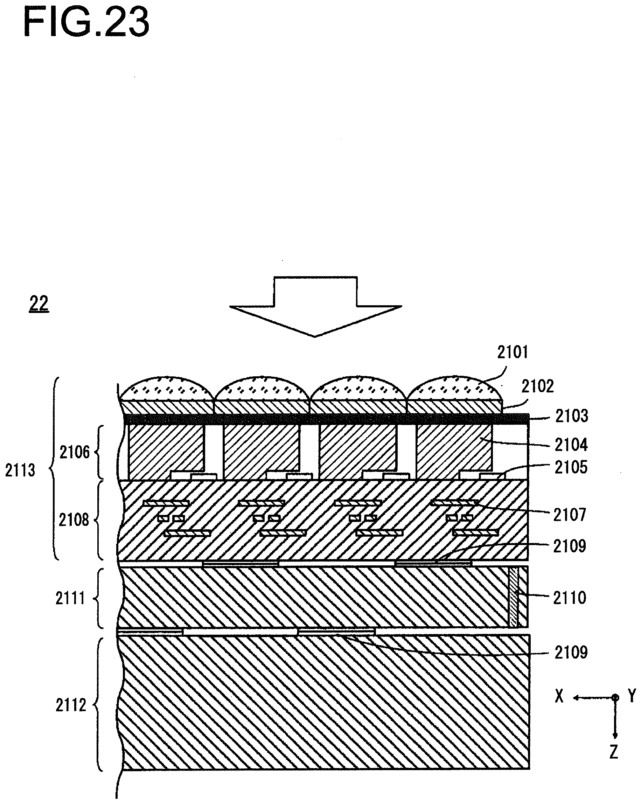

First, a laminated type image sensor 22 will be explained that is provided to an electronic device (for example, to an image capturing device 10) according to an embodiment of the present invention. It should be understood that this laminated type image sensor 22 is the device described in Japanese Patent Application 2012-139026, previously filed by the applicant of the present application. Fig. 23 is a sectional view of this laminated type image sensor 22. The image sensor 22 comprises an image capturing chip 2113 of the backside illumination type that outputs pixel signals corresponding to the light incident thereupon, a signal processing chip 2111 that processes these pixel signals, and a memory chip 2112 that stores these pixel signals. The image capturing chip 2113, the signal processing chip 2111, and the memory chip 2112 are laminated together, and are mutually electrically connected together by electrically conductive bumps 2109 made of copper or the like.

It should be understood that the incident light is principally incident toward the +Z axis direction shown by the outlined white arrow sign, as seen in the figure. In this embodiment, the surface of the image capturing chip 2113 on the side upon which the incident light is incident is termed its "back surface". Moreover, as shown by the coordinate axes, the leftward direction upon the drawing paper orthogonal to the Z axis is taken as being the +X axis direction, and the direction orthogonal to the Z axis and to the X axis and pointing forward from the drawing paper is taken as being the +Y axis direction. In some of the following figures, the coordinate axes shown in Fig. 23 are taken as being standard, and these coordinate axes are displayed so that the respective orientation of each figure can be understood.

An example of the image capturing chip 2113 is a backside illumination type MOS image sensor. A PD layer 2106 is provided on the back surface side of a wiring layer 2108. This PD layer 2106 is disposed two dimensionally, and includes a plurality of PDs (photo-diodes) 2104 that accumulate electric charge according to the light incident thereupon, and a plurality of transistors 2105 that are provided to correspond to the PDs 2104.

Color filters 2102 are provided on the side of the PD layer 2106 upon which light is incident, via a passivation layer 2103. These color filters 2102 are of a plurality of types that pass mutually different wavelength regions, and have a specific arrangement respectively corresponding to the arrangement of the PDs 2104. The arrangement of the color filters 2102 will be described hereinafter. A group of one color filter 2102, one PD 2104, and one transistor 2105 constitutes one pixel.

Micro lenses 2101 corresponding to each pixel are provided on the sides of the color filters 2102 upon which light is incident. These micro lenses 2101 condense the incident light upon their corresponding PDs 2104.

The wiring layer 2108 includes wiring 2107 that transmits the pixel signals from the PD layer 2106 to the signal processing chip 2111. This wiring 2107 may be multi-layered, and also may be provided with passive elements and active elements.

A plurality of bumps 2109 are disposed on the front surface of the wiring layer 2108. This plurality of bumps 2109 are positionally aligned with a plurality of bumps 2109 that are provided upon the opposing surface of the signal processing chip 2111, and the bumps 2109 that are thus mutually positionally aligned are joined together and are mutually electrically connected together by application of pressure and so on to the image capturing chip 2113 and the signal processing chip 2111.

In a similar manner, pluralities of bumps 2109 are disposed upon the mutually opposing surfaces of the signal processing chip 2111 and of the memory chip 2112. By these bumps 2109 being mutually positionally aligned, and by applying pressure and so on to the signal processing chip 2111 and to the memory chip 2112, the bumps 2109 that are mutually positionally aligned are mutually joined together and are electrically connected together.

It should be understood that the junctions between the bumps 2109 are not limited to being formed by copper bump bonding by solid phase diffusion; it would also be acceptable to arrange to employ micro bump connection by solder melting. Furthermore, for example, it will be sufficient to provide about one bump 2109 for one of the blocks to be described hereinafter. Accordingly, it would be possible for the sizes of the bumps 2109 to be made to be larger than the pitch of the PDs 2104. Moreover, it would also be possible for bumps that are larger than the bumps 2109 corresponding to the pixel region to be provided all together in the peripheral region outside the pixel region in which the pixels are disposed.

The signal processing chip 2111 has a TSV (through silicon via) 2110 that mutually connects together circuits that are provided on its front and back surfaces. It is desirable for this TSV 2110 to be provided in the peripheral region. Moreover, TSVs 2110 may also be provided in the peripheral regions of the image capturing chip 2113 and in the memory chip 2112.

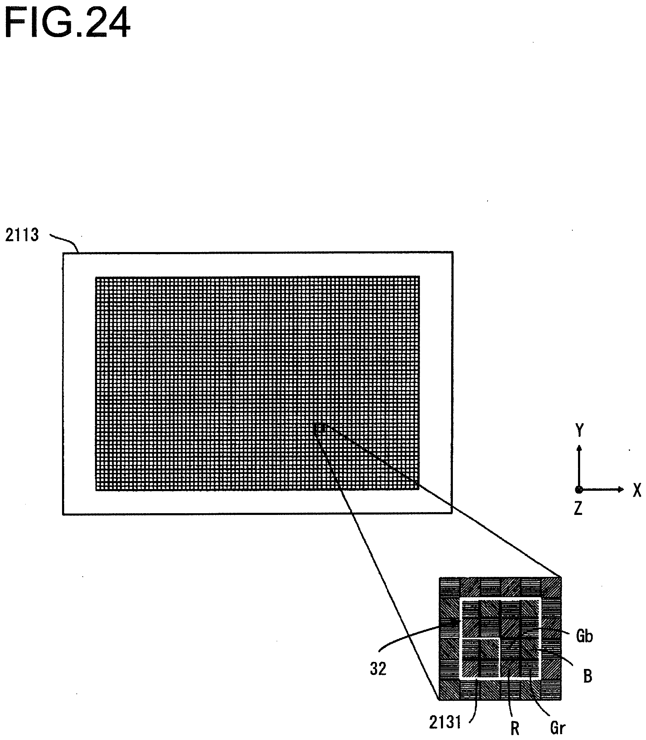

Fig. 24 is a figure for explanation of the arrangement of pixels upon the image capturing chip 113. In particular, this figure shows a situation in which the image capturing chip 2113 is observed from its back surface side. For example, eight million or more pixels may be arranged in the pixel region in the form of a matrix. In this embodiment, for example, four adjacent pixels in a 2×2 configuration constitute a single block 2131. And four adjacent blocks in a 2×2 configuration constitute a single unit group 32. The lattice lines in the figure conceptually show the way in which the blocks 2131 and the unit groups 32 are built up from adjacent pixels. The number of pixels making up each block 2131, and the number of blocks 2131 making up each unit group 32, are not limited to the example described above; each of them could be greater or smaller.

As shown in the enlarged view of a part of the pixel region, a block 2131 includes four so called Bayer arrays, each having green pixels Gb and Gr, a blue pixel B, and a red pixel R, arranged up, down, left and right. The green pixels are pixels having green filters as their color filters 2102, and receive light of green wavelength range in the incident light. In a similar manner, the blue pixels are pixels having blue filters as their color filters 2102 and receive light of blue wavelength range in the incident light, and the red colored pixels are pixels having red filters as their color filters 2102 and receive light of red wavelength range in the incident light.

In this embodiment, a plurality of blocks 2131 are defined so that at least one group of four pixels Gb, Gr, B, and R for one block 2131 are included therein. Each of the blocks 2131 can be individually controlled by control parameters that are determined for the four pixels in that block 2131. In other words, image signals whose imaging conditions are different can be acquired from the pixel groups included in some block 2131 and from the pixel groups included in some other block 2131. Examples of control parameters are frame rate, gain, sub-sampling ratio, number of rows or number of columns of pixel signals to be added together, charge accumulation time or number of times for charge accumulation, number of bits for digitalization, and so on. Furthermore, a control parameter may be a parameter for image processing after acquisition of the image signals from the pixels.

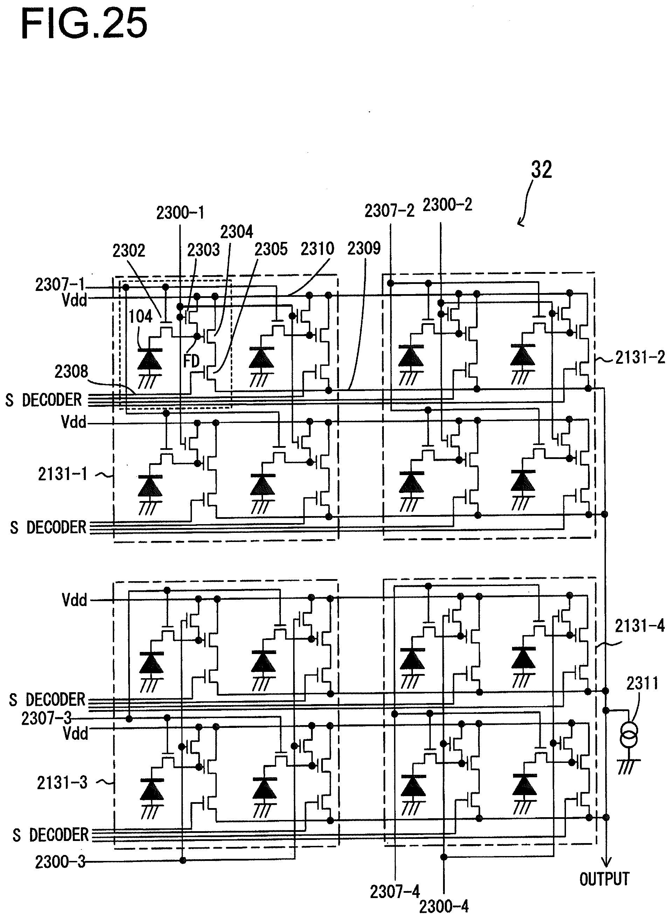

Fig. 25 is a circuit diagram corresponding to a single unit group 32 upon the image capturing chip 2113. In Fig. 25, the representative rectangle surrounded by the dotted line shows the circuitry that corresponds to a single pixel. Moreover, each of the rectangles surrounded by a single dotted broken line corresponds to a single block 2131. It should be understood that at least some of the transistors explained in the following description correspond to the transistors 2105 of Fig. 23.

As described above, each of the unit groups 32 is formed from four of the blocks 2131. Reset transistors 2303 of the pixels included in the unit group 32 are turned ON and OFF by units of the blocks 2131. Moreover, transfer transistors 2302 of the pixels included in the unit group 32 are also turned ON and OFF by units of the blocks 2131. In the example shown in Fig. 25, reset wiring 2300-1 is provided for turning the four reset transistors 2303 corresponding to the upper left block 2131-1 ON and OFF, and also TX wiring 2307-1 is provided for supplying transfer pulses to the four transfer transistors 2302 corresponding to that same block 2131-1.

In a similar manner, reset wiring 2300-3 is provided separately from the reset wiring 2300-1 described above for turning the four reset transistors 2303 corresponding to the lower left block 2131-3 ON and OFF. Moreover, TX wiring 2307-3 is provided separately from the TX wiring 2307-1 described above for supplying transfer pulses to the four transfer transistors 2302 corresponding to that same block 2131-3.

In a similar manner for the upper right block 2131-2 and for the lower right block 2131-4 as well, respective reset wiring 2300-2 and TX wiring 2307-2, and reset wiring 2300-4 and TX wiring 2307-4, are provided respectively for those blocks 2131.

The sixteen PDs 2104 corresponding to each pixel are connected to the respectively corresponding transfer transistors 2302. And transfer pulses are supplied via the TX wiring for each of the blocks 2131 described above to the gates of the transfer transistors 2302. Moreover, along with the drains of the transfer transistors 2302 being connected to the sources of the corresponding reset transistors 2303, so-called floating diffusion FD between the drains of the transfer transistors 2302 and the sources of the reset transistors 2303 are connected to the gates of corresponding amplification transistors 2304.

The drains of the reset transistors 2303 are connected in common to Vdd wiring 2310 to which power supply voltage is supplied. And reset pulses are supplied to the gates of the reset transistors 2303 via the reset wiring of each of the blocks 2131 described above.

The drains of the amplification transistors 2304 are connected in common to the Vdd wiring 2310, to which power supply voltage is supplied. Furthermore, the source of each of the amplification transistors 2304 is connected to the drain of the corresponding selection transistor 2305. And decoder wiring 2308, to which selection pulses are supplied, is connected to the gate of each of the selection transistors 2305. In this embodiment, such decoder wiring 2308 is provided independently for each of the sixteen selection transistors 2305. And the source of each of the selection transistors 2305 is connected to common output wiring 2309. A load current source 2311 supplies current to the output wiring 2309. In other words, the output wiring 2309 for the selection transistors 2305 is configured according to the source follower. It should be understood that the load current source 2311 could be provided upon the side of the image capturing chip 2113, or could be provided on the side of the signal processing chip 2111.

Now, the flow from the start of accumulation of electric charge to pixel output after the end of that accumulation will be explained. When reset pulses are applied to the reset transistors 2303 via the reset wiring of each of the blocks 2131 described above, and simultaneously transfer pulses are applied to the transfer transistors 2302 via the TX wiring of each of the blocks 2131 described above, then the electrical potentials of the PDs 2104 and the floating diffusions FD are reset for each of the blocks 2131 described above.

When the application of a transfer pulse to each of the PDs 2104 is canceled, the received light that is incident thereupon starts to be converted into electric change, which is accumulated. Thereafter, when a transfer pulse is applied again in the state in which no reset pulse is being applied, the accumulated electric charge is transferred to the floating diffusion FD, and the electrical potential of the floating diffusion FD becomes a signal electrical potential after charge accumulation from the reset electrical potential. And, when a selection pulse is applied to the selection transistor 2305 via the decoder wiring 2308, fluctuation of the signal electrical potential of the floating diffusion FD is transmitted to the output wiring 2309 via the amplification transistor 2304 and the selection transistor 2305. Due to this, a pixel signal corresponding to the reset electrical potential and to the signal electrical potential is outputted from the unit pixel to the output wiring 2309.

As described above, in this embodiment, reset wiring and TX wiring are provided in common for each of the four pixels that make up each of the blocks 2131. In other words, each reset pulse and each transfer pulse is applied simultaneously to all of the four pixels within the same block 2131. Accordingly, all of the pixels that make up one of the blocks 2131 start accumulation of electric charge at the same timing, and end accumulation of electric charge at the same timing. However, by selection pulses being applied in sequence to the respective selection transistors 2305, the pixel signals corresponding to the accumulated electric charges are selectively outputted from the output wiring 2309.

In this manner, in this embodiment, it is possible to control the timing of the start of charge accumulation for each of the blocks 2131 individually. To put it in another manner, it is possible to capture images at different timings for different ones of the blocks 2131.

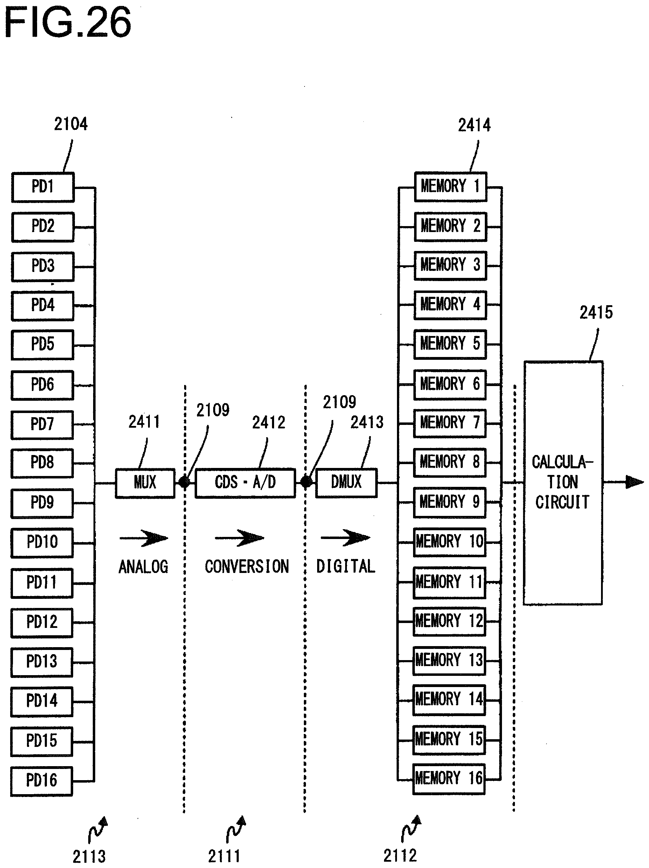

Fig. 26 is a block diagram showing the functional structure of the image sensor 22. An analog multiplexer 2411 selects the sixteen PDs 2104 that make up a unit group 32 in order, and outputs the respective pixel signals to the output wiring 2309 that is provided to correspond to that unit group 32. This multiplexer 2411 is formed upon the image capturing chip 2113, along with the PDs 2104.

The pixel signals outputted via the multiplexer 2411 are subject to correlated double sampling (CDS) and analog/digital (A/D) conversion by a signal processing circuit 2412 that is formed upon the signal processing chip 2111, and that performs correlated double sampling (CDS) and analog/digital (A/D) conversion. The pixel signals that have thus been A/D converted are transferred to a demultiplexer 2413, and are stored in pixel memories 2414 corresponding to the respective pixels. The demultiplexer 2413 and the pixel memories 2414 are formed upon the memory chip 2112.

After a calculation circuit 2415 has processed the pixel signals stored in the pixel memories 2414, they are transferred to a subsequent stage image processing unit. The calculation circuit 2415 may be provided upon the signal processing chip 2111, or may be provided upon the memory chip 2112. It should be understood that while, in Fig. 26, the connections for a single unit group 32 are shown, actually these are provided for each of the unit groups 32, and operate in parallel. However, it will be acceptable for an individual calculation circuit 2415 not to be provided for each unit group 32; for example, it would also be acceptable to arrange for a single calculation circuit 2415 to perform sequential processing while referring to the values in the pixel memories 2414 corresponding to each unit group 32 in order.

As described above, output wiring 2309 is provided corresponding to each of the unit groups 32. Since, in the image sensor 22, the image capturing chip 2113, the signal processing chip 2111, and the memory chip 2112 are laminated together, accordingly, by electrically connecting between the chips by using the bumps 2109 in this output wiring 2309, it is possible to route the wiring without making the chips larger in the surface direction.

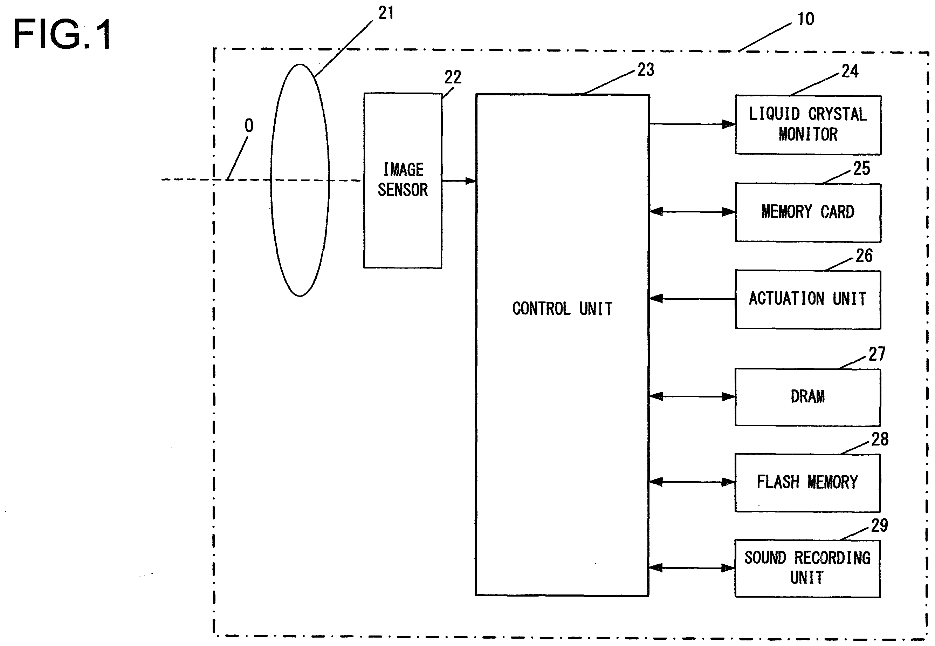

Fig. 1 is a block diagram showing the structure of an image capturing device according to a first embodiment of the present invention. This image capturing device 10 is a camera of the integrated lens type. The image capturing device 10 comprises an imaging optical system 21, an image sensor 22, a control unit 23, a liquid crystal monitor 24, a memory card 25, an actuation unit 26, a DRAM 27, a flash memory 28, and a sound recording unit 29.

The imaging optical system 21 is built from a plurality of lenses, and focuses an image of the subject upon the imaging surface of the image sensor 22. It should be understood that, in Fig. 1, the imaging optical system 21 is schematically shown as being a single lens.

The image sensor 22 is an image sensor such as, for example, a CMOS or a CCD or the like, and captures an image of a subject that has been focused by the imaging optical system 21 and outputs an image signal. The control unit 23 is an electronic circuit that controls the various sections of the image capturing device 10, and is built from a CPU and peripheral circuit thereof. A control program that is predetermined in advance is written into the flash memory 28, which is a non-volatile recording medium. By reading in and executing this control program from the flash memory 28, the control unit 23 performs control of the various sections. This control program uses the DRAM 27, which is a volatile recording medium, as a working region.

The liquid crystal monitor 24 is a display device that employs a liquid crystal panel. The control unit 23 repeatedly causes the image sensor 22 to repeatedly capture images of the subject upon a predetermined cycle (for example 1/60 second). And the control unit 23 performs image processing of various types upon the image signals outputted from the image sensor 22, and generates a so-called through image or live view image, which is displayed upon the liquid crystal monitor 24. Apart from the through image described above, for example, a setting screen for setting of image capture parameters (i.e. of imaging conditions) and so on may also be displayed upon the liquid crystal monitor 24.

The control unit 23 generates an image file that will be described hereinafter based on the output signals outputted from the image sensor 22, and records this image file into the memory card 25, which is a transportable recording medium. The actuation unit 26 has actuation members of various kinds, such as push buttons and so on, and actuation signals corresponding to actuation of those actuation members are outputted to the control unit 23. Moreover, the sound recording unit 29, having for example a microphone or the like, converts surrounding sounds to audio signals and inputs those signals to the control unit 23. It should be understood that it would also be acceptable not to record the image file 40 into the memory card 25, which is a transportable recording medium, but instead to record it into a hard disk or the like, which is a recording medium housed internally to the image capturing device 10 but not shown in the figures.

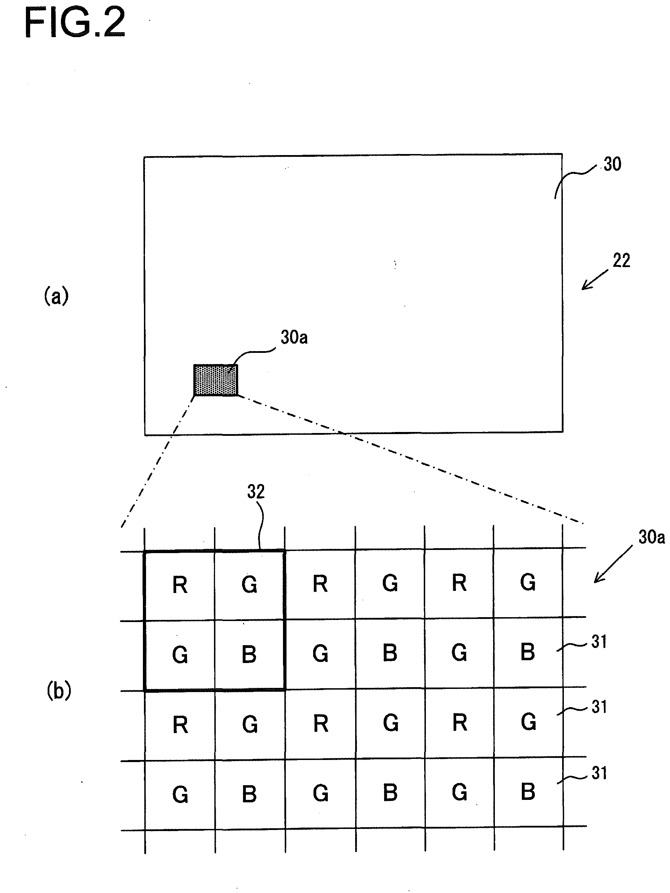

Fig. 2(a) is a plan view schematically showing the imaging surface 30 of the image sensor 22, and Fig. 2(b) is an enlarged plan view of a partial region 30a of that imaging surface 30. As shown in Fig. 2(b), a large number of image capture pixels 31 are arranged two dimensionally upon the imaging surface 30. Each of the image capture pixels 31 has a respective color filter, not shown in the figures. These color filters are of the three types of red (R), green (G), and blue (B), and the symbols "R", "G", and "B" in Fig. 2(b) represent the types of the color filters provided to the image capture pixels 31. As shown in Fig. 2(b), the image capture pixels 31 having color filters of these types are arranged according to a so-called Bayer array upon the imaging surface 30 of the image sensor 22.

The image capture pixels 31 that have red filters photoelectrically convert light, among the incident light, of the red wavelength band, and output received light signals (i.e. photoelectrically converted signals) corresponding thereto. In a similar manner, the image capture pixels 31 that have green filters photoelectrically convert light, among the incident light, of the green wavelength band, and output received light signals corresponding thereto. Moreover, the image capture pixels 31 that have blue filters photoelectrically convert light, among the incident light, of the blue wavelength band, and output received light signals corresponding thereto.

The image sensor 22 of this embodiment is configured so as to be capable of controlling each of the unit groups 32 made up from the four adjacent 2-pixel×2-pixel image capture pixels 31 on an individual basis. For example when, for two of the unit groups 32 that are mutually different from one another, electric charge accumulation has started simultaneously, then, for one of the unit groups 32, reading out of the electric charge, in other words reading out of the received light signals, may be performed 1/30 second after the start of accumulation of electric charge, while, for the other unit group 32, reading out of the electric charge may be performed 1/15 second after the start of accumulation of electric charge. To put it in another manner, in a single episode of image capturing, the image sensor 22 may set a different exposure time (i.e. a different charge accumulation time, or a so-called shutter speed) for each unit group 32.

Apart from the exposure time described above, the image sensor 22 is also capable of making the amplification ratio of the image signals (i.e. the so-called ISO speed) be different for each of the unit groups 32. Moreover, the image sensor 22 is also capable of changing the timing of start of electric charge accumulation and/or the timing of reading out of the received light signals for each of the unit groups 32. In other words, the image sensor 22 is capable of changing the frame rate of a video image capturing for each of the unit groups 32.

To summarize the above, the image sensor 22 is configured so as to be capable of varying the imaging conditions for each of the unit groups 32, such as exposure time, amplification ratio, frame rate and so on. For example, if read out lines not shown in the figures for reading out image signals from photoelectric conversion sections not shown in the figures possessed by the image capture pixels 31 are made to be capable of reading out image signals independently for each unit group 32, then it is possible to make the exposure time (i.e. the shutter speed) be different for each unit group 32. Furthermore, an amplification circuit not shown in the figures that amplifies the image signals generated by charge that has been photoelectric converted is provided independently for each of the unit groups 32, and, if it is arranged to be able to control the amplification ratios of the amplification circuits independently for each amplification circuit, then it is possible to make the signal amplification ratio (i.e. the ISO speed) be different for each of the unit groups 32.

It should be understood that it would also be acceptable for the number of image capture pixels that make up the unit groups 32 not to be the 2×2=4 pixels described above. It would be acceptable for each of the unit groups 32 to have at least one image capture pixel 31; and it would also be acceptable for the unit groups 32 to have more than four image capture pixels 31. Moreover, it would also be acceptable for the imaging conditions that can be set differently for each of the unit groups 32 to be other than the ones described above. For example, if a liquid crystal panel is provided upon the image sensor 22 and has independently controllable sections for each unit group 32 (with one section corresponding to a single unit group 32), and is used as a neutral density filter that can be turned ON and OFF, then it becomes possible to control the brightness (i.e. the aperture value) for each of the unit groups 32.

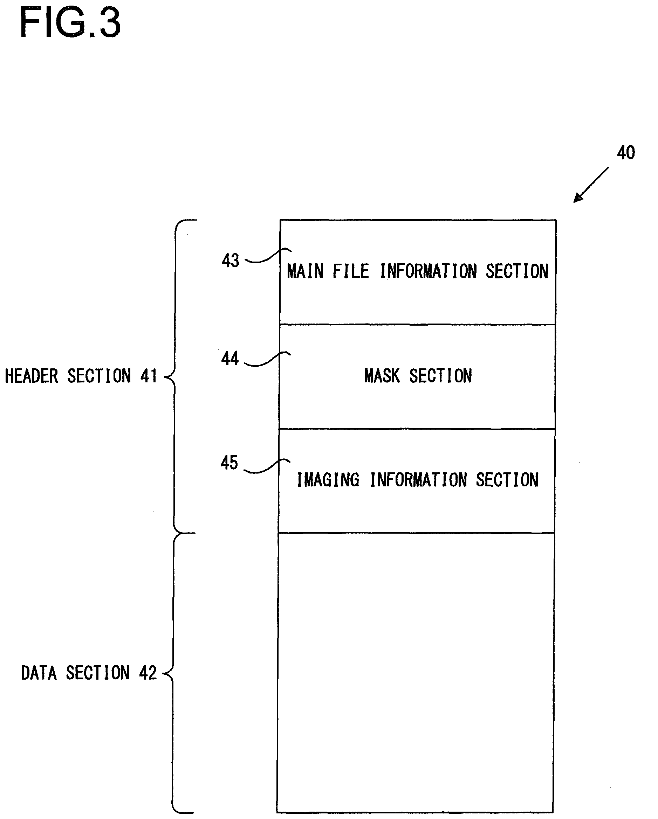

Next, the image file that is generated by the control unit 23 and recorded upon the memory card 25 will be explained. Fig. 3 is a schematic figure showing the structure of the image file according to this embodiment. The image file 40 has two blocks, a header section 41 and a data section 42.

The header section 41 is a block positioned at the start of the image file 40, and a main file information section 43, a mask section 44, and a imaging information section 45 are arranged therein in the sequence described above. For example, the size and/or the offset of various sections within the image file 40 (the header section 41, the data section 42, the mask section 44, the imaging information section 45, and so on) may be recorded in the main file information section 43. Imaging conditions information and mask information and the like described hereinafter are recorded in the mask section 44. Information related to image capturing, for example, the name of the type of the image capturing device 10, information about the imaging optical system 21 (for example, information related to optical characteristics thereof such as aberration and the like) and so on, are recorded in the imaging information section 45. And the data section 42 is a block that is positioned after the header section 41, and image information and audio information and so on are recorded therein.

Next, the image capture processing performed by the control unit 23 will be explained. In the image capture processing, the control unit 23 controls the imaging conditions for each of the unit groups 32 and captures an image of the photographic subject, and generates image data (i.e. image information). The control unit 23 sets (i.e. controls) the imaging conditions for each of the unit groups 32 so that they generate image information with pixel values of uniform brightness. In the following, the method for setting the imaging conditions by the control unit 23 will be described.

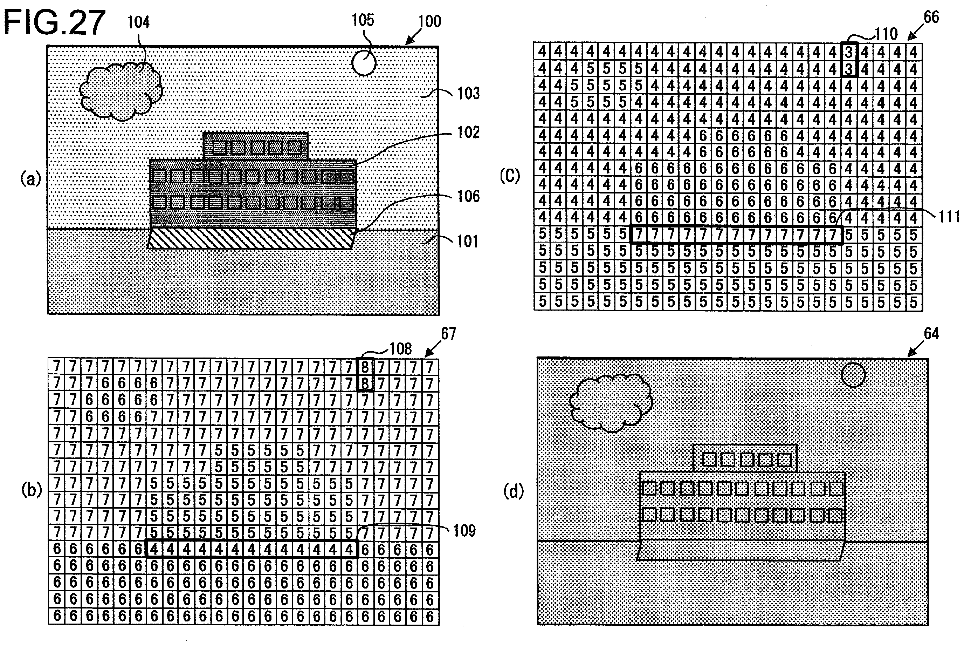

The method will be explained as a photographic subject shown in Fig. 27(a) is captured. A building 102 that is built upon the ground surface 101 is included in the captured screen image 100 shown in Fig. 27(a). Sky 103 covers the background, and a cloud 104 and the Sun 105 are present in the sky 103. A shadow 106 of the building 102 is cast upon the ground surface 101 in front of the building 102, due to light from the Sun 105 being intercepted by the building 102.

When capturing an image of the photographic subject shown in Fig. 27(a), first, the control unit 23, on a preliminary basis, captures an image of the photographic subject in a state in which the imaging conditions are the same for each of the unit groups 32. This image capturing is in order to determine the imaging conditions. In the following, this image capturing in order to determine the imaging conditions will be termed the "preliminary capturing". Moreover, the image capturing that is performed in order to create image information for being recorded upon the memory card 25 will be termed the "main capturing", in order to distinguish it from the preliminary capturing. It should be understood that this preliminary capturing may, for example, also serve as an image capturing that is performed in order to generate a through image (i.e. a live view image). Moreover, it will also be acceptable to arrange to record the image information created by this preliminary capturing upon the memory card 25.

By performing the above preliminary capturing, the control unit generates a Bv value map of the captured screen image 100. The Bv value map is a map in which the brightnesses (i.e. the luminance values, in other words the Bv values) for each unit group 32 are arranged two dimensionally so as to match the arrangement of the unit groups 32. To put it in another manner, the Bv value map is a distribution diagram of the brightnesses (i.e. the luminance values, in other words the Bv values), which are one type of imaging conditions of the captured screen image 100. The control unit 23 generates the Bv value map of the captured screen image 100 based on the image signals (i.e. the photoelectric conversion signals produced by the photoelectric conversion section not shown in the figures) read out from the unit groups 32. It should be understood that, while the control unit 23 creates the Bv value map of the captured screen image 100 by the preliminary capturing, this should not be considered as being limitative. It would also be acceptable to arrange for the image capturing device 10 to be equipped with a photometric sensor not shown in the figures, and to generate the Bv value map based on the values output from this photometric sensor.

An example is shown in Fig. 27(b) of the Bv value map corresponding to the captured screen image 100 shown in Fig. 27(a). According to the Bv value map 67 shown by way of example in Fig. 27(b), the Bv values measured by the unit groups 32 in a portion 108 where the Sun 105 is positioned are 8, and it will be understood that these values are the brightest values over the entire captured screen image 100. Moreover, the Bv values measured by the unit groups 32 in a portion 109 where the shadow 106 of the building 102 is positioned are 4, and it will be understood that these values are the darkest values over the entire captured screen image 100.

Here, it is supposed that the shutter speed (the charge accumulation time period, i.e. the exposure time) for the main capturing is 1/30 second, and that the aperture value is F8. In this case, the Tv value is 5 and the Av value is 6, and an exposure value (i.e. an Ev value) equal to the Tv value + the Av value =5+6=11 is obtained. It should be understood that it would be acceptable to arrange for the shutter speed and/or the aperture value to be set manually in advance by the user, or to arrange for the control unit 23 to set them to appropriate values based on the photometric results for the entire screen (i.e. based on the Bv value map 67 shown in Fig. 27(b) or the like). Moreover, it would also be acceptable to arrange for the control unit 23 to detect the main photographic subject from the captured screen image 100, and to determine the exposure value for the main capturing based on the aperture value and the shutter speed of a region that includes the main photographic subject that has been detected. It should be understood that it would also be acceptable to arrange for the detection of the main photographic subject to be set manually by the user. This is not limited to the region that includes the main photographic subject; it would also be possible to arrange for the user to be able to set a region manually in advance to become the standard for determining exposure values.

The control unit 23 generates an Sv value map of the captured screen image 100 based on the exposure values for the main capturing and the Bv value map 67 shown in Fig. 27(b). The Sv value map is a map in which the Sv values for each of the unit groups 32 for the main capturing (these are numerical values specifying the amplification ratios of amplification circuits not shown in the figures, and are values corresponding to so-called ISO speed) are arranged two dimensionally so as to be matched to the arrangement of the unit groups 32. To put it in another way, the Sv value map is a distribution diagram of the amplification ratios, which are one type of correction amount for the captured screen image 100.

The control unit 23 generates the Sv value map so that the exposure value (i.e. the Ev value) becomes the same for all of the unit groups 32. In concrete terms, the value obtained by subtracting the Ev value described above from each of the Bv values included in the Bv value map 67, is taken as being the Sv value at that position.

The Sv value map is shown in Fig. 27(c), corresponding to the Bv value map 67 shown by way of example in Fig. 27(b). According to the Sv value map shown in Fig. 27(c), the Sv values that are set for the unit groups 32 in the portion 110 in which the Sun 105 is positioned are Ev value - Bv value=11-8=3. Moreover, the Sv values that are set for the unit groups 32 in the portion 111 in which the shadow 106 of the building 102 is positioned are 11-4=7.

The control unit 23 narrows down an aperture not shown in the figures to an amount just corresponding to an aperture value of F8, sets the shutter speed of 1/30 second described above and the Sv value specified by the Sv value map 66 shown in Fig. 27(c) for each of the unit groups 32, and performs main capturing. To put this in another manner, the control unit 23 generates image information (i.e. image data) in which correction has been made based on the Sv value map 66, which is a distribution diagram of correction amount. An example is shown in Fig. 27(d) of image information that is generated by the main capturing. By comparing with Fig. 27(a), it will be understood that, in the image information 64 shown by way of example in Fig. 27(d), the pixel values over the entire screen image have become uniform (i.e., even). In other words, the difference from the captured screen image 100 shown by way of example in Fig. 27(a) is that an image has been generated in which the differences in brightness over the entire screen image are small, and whose contrast is low.

It should be understood that the image information 64 that is generated here is so-called RAW image data. In other words, it is the data in which the image signals read out from the image capture pixels 31 are arranged two dimensionally just as they are, before image processing of various types is performed thereupon.

Along with recording the image information 64 shown in Fig. 27(d) upon the memory card 25, the control unit 23 also records the Bv value map 67 shown in Fig. 27(b), the Sv value map 66 shown in Fig. 27(c), information corresponding to the shutter speed (for example 1/30 second) for the main capturing, and information corresponding to the aperture value (for example F8) for the main capturing, upon the memory card 25 in correspondence with the image information 64. It should be understood that, while it is arranged for the control unit 23 to record the image information 64, the Bv value map 67, the Sv value map 66, the information corresponding to the shutter speed for the main capturing, and the information corresponding to the aperture value for the main capturing upon the memory card 25, this is not to be considered as being limitative. It would also be acceptable to arrange for the control unit 23 to store the image information 64 and the Sv value map 66 upon the memory card 25. And it would also be acceptable to arrange for the control unit 23 to store the image information 64, the Bv value map 67, and the Sv value map 66 upon the memory card 25. Moreover, it would also be acceptable to arrange for the control unit 23 to store the image information 64, the Bv value map 67, the information corresponding to the shutter speed for the main capturing, and the information corresponding to the aperture value for the main capturing, upon the memory card 25. Even further, it would also be acceptable to arrange for the control unit 23 to store the image information 64, the Sv value map 66, the information corresponding to the shutter speed for the main capturing, and the information corresponding to the aperture value for the main capturing, upon the memory card 25.

The image information 64 shown by way of example in Fig. 27(d) is an image whose brightness is uniform and whose contrast is low, and cannot be said to be an image that recreates the captured screen image 100 shown by way of example in Fig. 27(a). This is because, in this embodiment, it is not assumed that the image information 64 recorded on the memory card 25 is reproduced just as it is (i.e. without processing).

In this embodiment, the control unit 23 records information related to various imaging conditions, such as the Bv value map and so on, upon the memory card 25 in association with the image information 64. By performing image processing upon the image information 64 (for example, so-called development processing or the like), according to the imaging conditions, based on the above information, it is possible to generate a recreated image that is faithful to the captured screen image 100 shown by way of example in Fig. 27(a).

With a prior art camera, image capturing is performed while setting a uniform Sv value over the entire screen image. Accordingly when, as for example shown in Fig. 27(a), an image of a photographic subject is captured that includes a bright portion such as the Sun 105 or the like and a dark portion such as the shadow 106 or the like, either white-clipping occurs in the portion with the Sun 105, or black-clipping occurs in the portion with the shadow 106. To put it in another manner, if white-clipping and also black-clipping occur upon the screen image, then, even if image capturing is performed by setting a uniform Sv value over the entire screen image, while it is possible to perform image capturing while canceling out one only of either white-clipping or black-clipping, it is not possible to perform image capturing so as to cancel out both of them.

By contrast, when image capturing is performed with the image capturing device 10 of this embodiment, since the Bv value is measured for each of the unit groups 32, and an Sv value is set for each of the unit groups 32 according to the result of that measurement for each of the unit groups 32, accordingly it is possible to generate image information 64 in which neither white-clipping nor black-clipping occurs.

While the image information 64 that is generated in this manner is an image whose contrast is low, since both the Bv value map 67 and the Sv value map 66 are recorded together, accordingly, finally, neither white-clipping nor black-clipping occur, and it is possible simply and easily to generate a clear image whose dynamic range is broad. If the dynamic range of a device for development (i.e. for reproduction) is narrower than the dynamic range of the image capturing device, then, due to constraints upon the development device, sometimes it happens that white-clipping or black-clipping may occur when development is performed based on the Bv value map 67 and the Sv value map, and this is undesirable. In such a case, it will be acceptable for the development device (i.e. the reproduction device) to perform development while referring to the differences in Bv value or the ratios of Bv value or the like for each of the regions. In other words, by performing development in accordance with the characteristics of the development device based on the differences, or of the ratios, of luminance value for each of the regions at the image capturing, it is possible to generate a clear image whose dynamic range is the broadest possible for the particular development device.

It should be understood that, in the case of performing capture of a video image, in the interval between successive frames, it may be considered that capturing a former flame as the preliminary capturing described above, and that capturing the next flame as the main capturing. In other words, the control unit 23 may create the Bv value map 67 based on the result of image capturing the former frame, and may capture the next frame on the basis thereof.

While, in this embodiment, explanation was given with regard to an image in which white-clipping and also black-clipping were occurring, this is not to be considered as being limitative. It would also be acceptable to arrange to perform control so as to make the pixel values even, for an image in which only one of white-clipping or black-clipping is occurring. Moreover, it would also be acceptable to arrange to generate image information 64 in which the pixel values have been made uniform, even for an image in which neither white-clipping nor black-clipping is occurring.

It would also be acceptable to arrange for the control unit 23 to perform control so as to make the pixel values uniform, even for an image in which neither white-clipping nor black-clipping is occurring. In this case, it would be acceptable to arrange to record, upon the memory card 25, the image information generated by the preliminary capturing, the Bv value map 67, the Sv value map 66, the information corresponding to shutter speed for the main capturing, and the information corresponding to aperture value for the main capturing. It would also be acceptable to arrange, after capturing, to develop the image information generated by the preliminary capturing as the image information 64.

It should be understood that, in the above explanation, while the terms "even pixel values" and "uniform pixel values" have been used, this does not mean that the pixel values are exactly the same at each and every location upon the captured screen image. In other words, it will be sufficient to set the Sv values so that the pixel values within certain range upon the captured screen image come within a generally constant range (i.e. a practical range); for example, there is no need to take into consideration very small differences in pixel value of levels that are difficult to perceive visually. Thus, while the terms "even pixel values" and "uniform pixel values" are used, this is not to be considered as being limitative, and it will be sufficient to adjust the imaging conditions so that the pixel values fall within a predetermined range. In other words, it will be acceptable to arrange to change the pixel values so as to reach a state in which the pixel values come within the dynamic range of the image capturing device 10, or, to put it in another manner, so as to reach a state in which neither white-clipping nor black-clipping occurs. In this case, if a region in which white-clipping or black-clipping is occurring is detected by the control unit 23, then image capturing is performed under such imaging conditions as to cancel out this white-clipping or black-clipping in the region where it has been detected. In a region in which neither white-clipping nor black-clipping is occurring, image capturing is performed without changing the imaging conditions. It will also be acceptable to arrange for the control unit 23 to record address information for the regions in which white-clipping or black-clipping is occurring. It is possible to arrange for the control unit 23 to be capable of setting a plurality of exposure values for main capturing within the captured screen image 100. It would also be possible to arrange, when the Bv value map 67 has been detected for the captured screen image 100, to determine a threshold value for Bv value, and, for regions in which Bv values greater than or equal to this threshold value are detected, to change the Sv values so that they become equal to a first exposure value, while, for regions in which Bv values less than this threshold value are detected, changing the Sv values so that they become equal to a second exposure value. The number of threshold values is not limited to one, but may be two or more; and the number of exposure values that are set is determined by the number of threshold values.

The control unit 23 performs the preliminary capturing, and generates the Bv value map of the captured screen image 100, but this is not to be considered as being limitative. It would also be acceptable, for example, to arrange for the control unit 23 to detect information related to movement of the photographic subject, for example its shifting distance or its shifting speed or the like. For example, it would also be acceptable to arrange for the control unit 23, by detecting information related to movement of the photographic subject, to calculate the longest shutter speed at which hand shaking or blurring of the photographic subject or the like does not occur for each photographic subject or for each region, and to generate a Tv value map based on this shutter speed. And control may be performed to change the Av values so that the Ev values become uniform.

While the control unit 23 generates the Sv value map 66, this should not be considered as being limitative. It would also be acceptable, if the user has fixed the Sv values, to arrange for the control unit 23 to vary the shutter speed for each of the unit groups 32, and to generate the Tv value map so that the Ev values over the entire screen image become even pixel values or uniform pixel values. It would also be acceptable to arrange for the control unit 23 to vary the aperture value for each of the unit groups 32, and to generate the Av value map so that, over the entire screen image, the Ev values become even pixel values or uniform pixel values. Yet further, it would also be acceptable to arrange for the control unit 23 to vary both the shutter speed and also the aperture value for each of the unit groups 32, and to generate the Tv value map and the Av value map so that, over the entire screen image, the Ev values become even pixel values or uniform pixel values. In other words, it would be acceptable to arrange for the control unit 23 to generate at least one of the Sv value map 66, the Tv value map, and the Av value map; and the number of maps that are generated is not limited to being only one: a plurality of maps may be generated.

Next, the image capture functions of the image capturing device 10 and the image files 40 that are created (i.e. recorded) by those image capture functions will be explained. The user can perform predetermined actuation upon the actuation members of the actuation unit 26, and thereby is able to change over (i.e. select) between the image capture functions explained below. The control unit 23 performs image capturing according to the image capture processing described above based on the image capture function that is thus selected, creates an image file 40, and records this file 40 upon the memory card 25.

### (1) The still image capture function A (a single still image)

A still image capture function A is a function for capturing a still image by subdividing the captured screen image into a plurality of partial regions, and by setting imaging conditions individually for each of those partial regions.

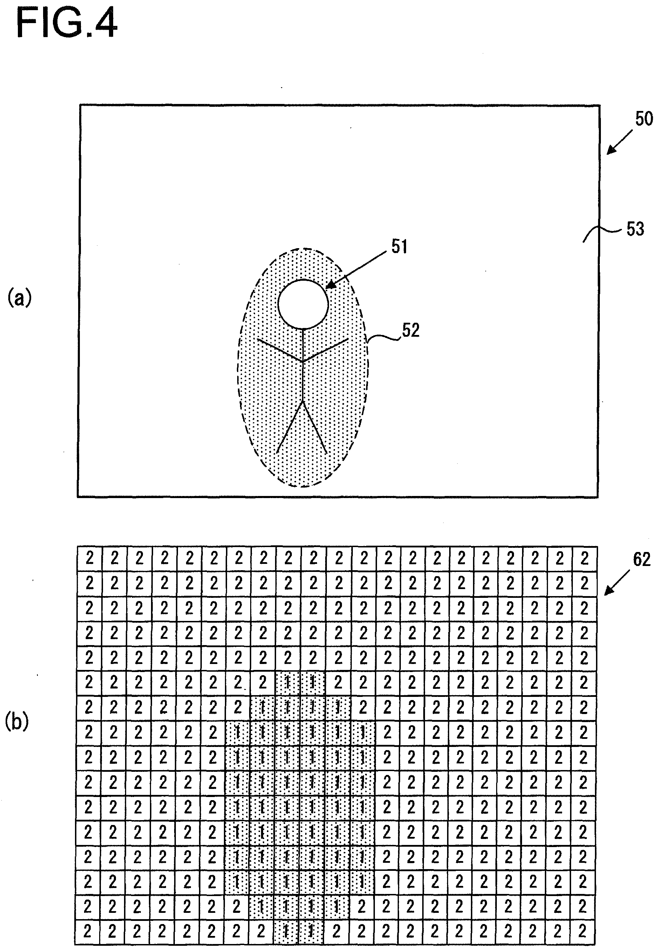

The screen image 50 (i.e. its image capturing range) captured by the image sensor 22 and a photographic subject 51 are schematically shown in Fig. 4(a). The procedure for capturing an image of the photographic subject 51 shown in Fig. 4(a) using the still image capture function A will now be explained. Before performing the main capturing, the control unit 23 once preliminarily captures an image of the photographic subject 51. And the control unit 23 performs predetermined image analysis processing upon the image of the photographic subject 51 (i.e. the image in which the photographic subject 51 appearing) that has been obtained by the preliminary capturing. This image analysis processing may, for example, be processing to detect a main photographic subject portion and a background portion by a per se known photographic subject detection technique (i.e. a technique for calculating a feature amount and thereby detecting a range in which a predetermined photographic subject is present). By performing this image analysis processing, the captured screen image 50 is subdivided into a main photographic subject region 52 that includes the main photographic subject portion and a background region 53 that includes the background portion.

It should be understood that, in Fig. 4(a), a region generally surrounding the photographic subject 51 is shown as being the main photographic subject region 52, but a shape that follows the external shape of the photographic subject 51 would also be acceptable. In other words, it would be acceptable for the main photographic subject region 52 to be set so as not to include any objects other than the photographic subject 51, as much as possible.

For each of the unit groups 32, the control unit 23 records information in the image file 40 specifying whether each of the unit groups 32 is included in the main photographic subject region 52, or is included in the background region 53. This information can be employed, for example, in image processing at the time of reproduction. For example, the photographic subject 51 could be shown as highlighted, or only the photographic subject 51 could be extracted from the image.

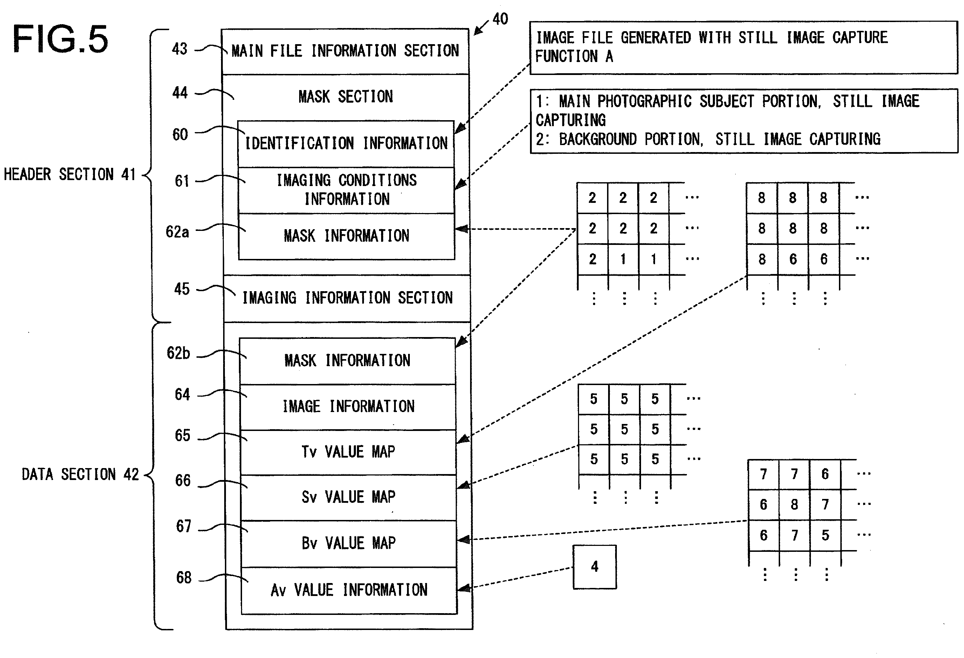

Fig. 5 is a schematic figure showing the structure of the image file 40 generated when an image has been captured using the still image capture function A. Identification information 60, imaging conditions information 61, and mask information 62a are recorded in a mask section 44 in this specified sequence. The identification information 60 is information indicating that this image file 40 is a file that has been generated with the still image capture function A.

The imaging conditions information 61 is information specifying what kind of application (i.e. objective or role) the unit group 32 has. For example when, as described above, the captured screen image 50 (refer to Fig. 4(a)) is subdivided into the main photographic subject region 52 and the background region 53, then each of the unit groups 32 belongs to the main photographic subject region 52 or belongs to the background region 53. In other words, each of the unit groups 32 has an application, such as the application "capturing a still image of the main photographic portion" or the application "capturing a still image of the background portion". The imaging conditions information 61 is information that specifies that there existed two types of application for the unit groups 32 when generating this image file 40, i.e. the application "capturing a still image of the main photographic portion" and the application "capturing a still image of the background portion", and that specifies a unique number allocated to each of these applications. For example, the number "1" may be allocated to the application "capturing a still image of the main photographic portion", and the number "2" may be allocated to the application "capturing a still image of the background portion".

The mask information 62a is information that specifies the application (i.e. objective or role) for each of the unit groups 32. In this embodiment, the mask information 62a is taken as being "information specifying the numbers allocated in the imaging conditions information 61, and expressed the form of a two dimensional map matched to the positions of the unit groups 32". In other words, when the unit groups 32 that are arranged in a two dimensional array are specified with the two integers x and y, i.e. by two dimensional coordinates (x,y), then the application of the unit group 32 that is present at the position (x,y) is expressed as the number that is present in the position (x,y) in the mask information 62a. For example, if the number "1" is entered at the position of the coordinates (3,5) in the mask information 62a, then it will be understood that the application "capturing a still image of the main photographic portion" is provided for the unit group 32 that is positioned at the coordinates (3,5). To put it in another manner, it will be understood that the unit group 32 that is positioned at the coordinates (3,5) belongs to the main photographic subject region 52.

An example of the mask information 62a corresponding to the captured screen image 50 shown in Fig. 4(a) is shown in Fig. 4(b). "1" is stored in the positions of the unit groups 32 that belong to the main photographic subject region 52, while "2" is stored in the positions of the unit groups 32 that belong to the background region 53.

The mask information 62b, the image information 64, the Tv value map 65, the Sv value map 66, the Bv value map 67, and the Av value information 68 are stored in this specified sequence in the data section 42. The mask information 62b is the same information as the mask information 62a that is stored in the mask section 44. Here, the reason for the same mask information 62a, 62b to be stored in both the mask section 44 and the data section 42, is in order to make it simple and easy to handle the image file 40.

Although the details will be described hereinafter, in some cases, in an image file 40 that has been created by some other function, mutually different mask information 62a, 62b may be stored in the mask section 44 and in the data section 42. In the still image capture function A, for example, if the mask information 62b is stored in the data section 42 but the mask information 62a is not stored in the mask section 44, then the structure of the image file 40 may change for each function. Since in this case the handling of the image file 40 becomes complicated, accordingly, in this embodiment, the same mask information 62a, 62b is intentionally stored in both the mask section 44 and the data section 42, so that differences in the structure of the image file 40 for each of the functions are kept to the minimum limit. It should be understood that either one of the mask information 62a, 62b may be omitted, and in that case it is possible to reduce the size of the storage region occupied by the image file 40. Moreover, even if both of the mask information 62a, 62b are recorded, since it will be understood from the identification information whether or not it is necessary to read in both of the mask information 62a, 62b, accordingly, if it is determined that one of those sets of mask information is not necessary for reproduction processing or the like, then it is possible to shorten the time for reading in the file by skipping the reading in of that one.

It should be understood that, in the following explanation, the mask information 62a stored in the mask section 44 and the mask information 62b stored in the data section 42 will sometimes generically be referred to as "mask information 62".

The image information 64 is information that is recorded in a format before image processing of various types has been performed upon the image signal outputted from the image sensor 22 by performing the main capturing, and is so-called RAW image data. The Tv value map 65 is information in which the Tv values that specify the shutter speeds set for each of the unit groups 32 are expressed in the form of a two-dimensional map matched to the positions of the unit groups 32. For example, the shutter speed that is set for the unit group 32 that is positioned at the coordinates (x,y) can be determined by checking the Tv value stored in the Tv value map 65 at the coordinates (x,y). In this embodiment, if a single Tv value is set for the entire captured screen image, then all of the Tv values included in the Tv value map 65 have the same value.

Like the Tv value map 65, the Sv value map 66 is information in which the Sv values that specify the ISO speeds set for each of the unit groups 32 are expressed in the form of a two-dimensional map. The Bv value map 67 is information in which the Bv values that specify the photographic subject luminance values when performing the main capturing measured by each of the unit groups 32, in other words the luminance values of the light from the photographic subject incident upon each of the unit groups 32, are expressed in the form of a two-dimensional map, like the Tv value map 65. Moreover, the Av value information 68 is information specifying the aperture values for the main capturing. In this embodiment, the Av value is different from the Tv values, the Sv values, and the Bv values, and is a value that does not exist for each of the unit groups 32. Accordingly the difference from the Tv values, the Sv values, and the Bv values is that only a single value for the Av value is stored, and it is not the case that a plurality of Av values are information stored in the form of a two dimensional map.

By performing image capturing using the still image capture function A as described above, the control unit 23 records upon the memory card 25 the image file 40 in which the image information 64 generated by the image sensor 22 that is capable of setting the imaging conditions for each of the unit groups 32, and data related to the imaging conditions for each of the unit groups 32 (i.e. the imaging conditions information 61, the mask information 62, the Tv value map 65, the Sv value map 66, the Bv value map 67, and so on) are mutual correspondence.

### (2) The video image capture function A (a single video image)

A video image capture function A is a function for capturing a video image by subdividing the captured screen image into a plurality of partial regions, and by setting imaging conditions individually for each of those partial regions. The aspect of difference from the still image capture function A is the feature that the image that is captured is not a still image, but is a video image. Since the image that is captured is not a still image but is a video image, accordingly there is a possibility that the "application for each unit group 32" described above in connection with the still image capture function A may change for each frame.

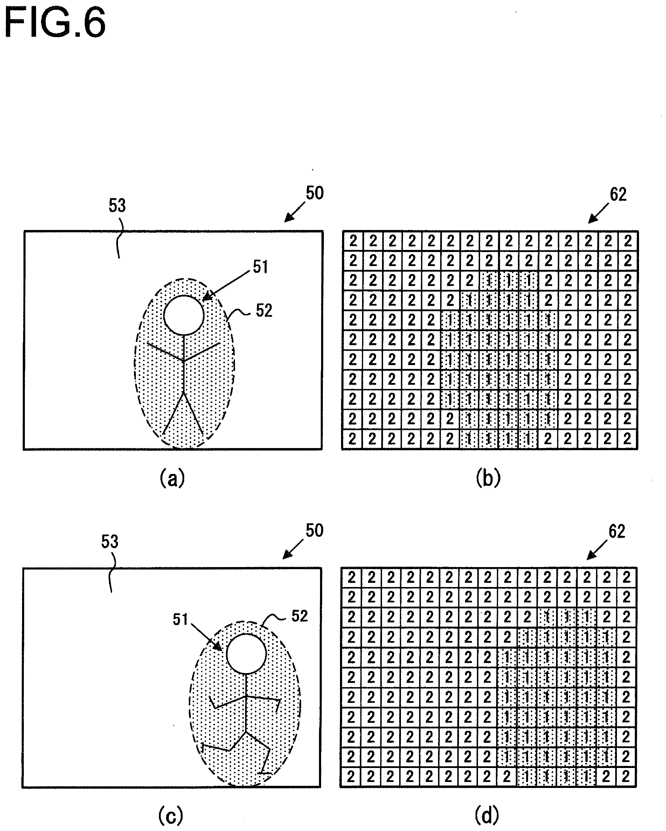

The screen image 50 captured by the image sensor 22 (i.e. its image capturing range) and a photographic subject 51 are schematically shown in Fig. 6(a). Before performing the main capturing, the control unit 23 preliminarily captures an image. And the control unit 23 performs predetermined image analysis processing upon the image of the photographic subject 51 (i.e. the image of the photographic subject 51 appearing) that has been obtained by the preliminary capturing. By performing the image analysis processing, the captured screen image 50 is subdivided into a main photographic subject region 52 that includes the main photographic subject portion and a background region 53 that includes the background portion. The control unit 23 sets different imaging conditions for the unit groups 32 within the main photographic subject region 52 and for the unit groups 32 within the background region 53, performs the main capturing of the first frame, and generates image data. An example of the mask information 62 at this time is shown in Fig. 6(b). As one example, in the mask information 62 shown in Fig. 6(b), the number "1" is allocated to the unit groups 32 that belong to the main photographic subject region 52, while the number "2" is allocated to the unit groups 32 that belong to the background region 53.

Next, the control unit 23 performs image analysis processing upon the image data of the first frame, and detects the main photographic subject portion and the background portion. Thereby, the image data of the first frame is subdivided into the main photographic subject region 52 and the background region 53, as shown in Fig. 6(c). An example of the mask information 62 at this time is shown in Fig. 6(d).

Since for the mask information 62 corresponding to the result of the preliminary capturing (refer to Fig. 6(b)) and for the mask information 62 corresponding to the result during of the main capturing of the first frame (refer to Fig. 6(d)) were performed at different time points (i.e. there is a time difference between them), accordingly, for example, if the subject 51 is moving or if the user has moved the image capturing device 10, these two sets of mask information 62 will have different contents. To put this in another manner, the mask information 62 is dynamic information that changes along with the passage of time.

The control unit 23 records the mask information 62b, the Tv value map 65, the Sv value map 66, the Bv value map 67, and the Av value information 68 for each frame in an image file 40, together with the image information 64 for each frame. Accordingly, after image capturing, it is possible to acquire the information obtained during image capturing from the image file 40 without any loss, so that it is possible to make effective use of that information during video image reproduction or the like.

It should be understood that the processing for the main image capturing for the third and subsequent frames is the same as the processing described above for the second frame, and accordingly explanation thereof will be curtailed. The control unit 23 repeatedly performs the processing described above until image capturing is completed (for example, until a predetermined time period has elapsed, or until the user performs predetermined actuation for terminating image capturing).

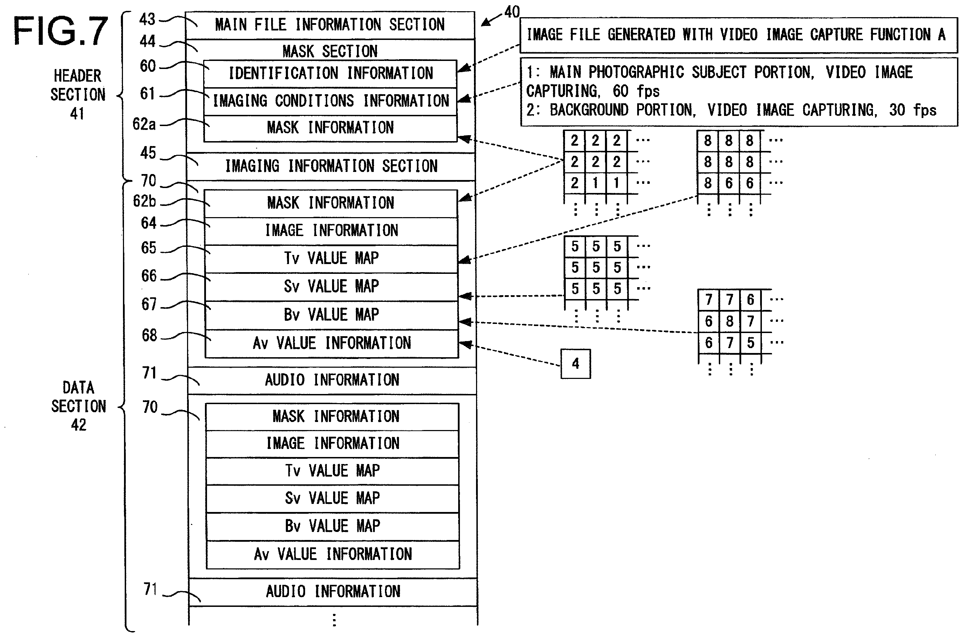

Fig. 7 is a schematic figure showing the structure of the image file 40 that is generated when capturing is performed using the video image capture function A. In the following, the differences from the case performing by using the still image capture function A shown in Fig. 5 will be explained in detail.

The identification information 60 specifies that this image file 40 is one that has been created by the video image capture function A. The imaging conditions information 61 is information obtained by adding the frame rate to the imaging conditions information 61 for the still image capture function A. In other words, this imaging control information 61 is information specifying that, when generating this image file 40, two types of application existed for the unit groups, for example "capture a video image of the main photographic subject portion at 60 fps" and "capture a video image of the background portion at 60 fps", and that also specifies a unique number allocated to each of these applications. For example, the number "1" may be allocated to "capture a video image of the main photographic subject portion at 60 fps", while the number 2 is allocated to "capture a video image of the background portion at 60 fps".

The mask information 62a is similar information to the case with the still image function A described above. However, in the case of video image capturing, since the mask information 62 is dynamic information that changes with each frame as previously described, accordingly it is necessary to determine of which frame the mask information 62 is recorded in the header section 41. In this embodiment, the mask information 62a specifying the imaging conditions that were set for each of the unit groups 32 during image capturing of the first frame, in other words the mask information 62 shown by way of example in Fig. 6(b), is recorded in the header section 41. This is done in order to prevent handling of the image file 40 from becoming complicated, as described in connection with the still image capture function A.

For each frame, a block 70 of the appropriate size for one frame is stored in the data section 42 in the order of image capturing. A single such block 70 is built up from the mask information 62, the image information 64, a Tv value map 65, an Sv value map 66, a Bv value map 67, and Av value information 68. Moreover, together with the block 70 for each frame, audio information 71 is also stored in the data section 42. The audio information 71 is divided into information for each frame so as to make it easy to perform video image reproduction, and is multiplexed with the block 70 and stored in the data section 42. It should be understood that this multiplexing of the audio information 71 may be performed, not for a single frame, but for every predetermined number of frames. Since each item of information in each block 70 is the same in the case of the still image capture function A except that they are recorded for every frame, accordingly explanation thereof will be curtailed.

By performing image capturing using the video image capture function A as described above, the control unit 23 records upon the memory card 25 the image file 40 in which the image information 64 generated by the image sensor 22 that is capable of setting the imaging conditions for each of the unit groups 32, and data related to the imaging conditions for each of the unit groups 32 (i.e. the imaging conditions information 61, the mask information 62, the Tv value map 65, the Sv value map 66, the Bv value map 67, and so on) are mutual correspondence.

### (3) The still image capture function B (a plurality of still images)

A still image capture function B is a function for, in a single episode of image capturing, capturing a plurality of still images related to the same photographic subject simultaneously under imaging conditions that are mutually different from one another.

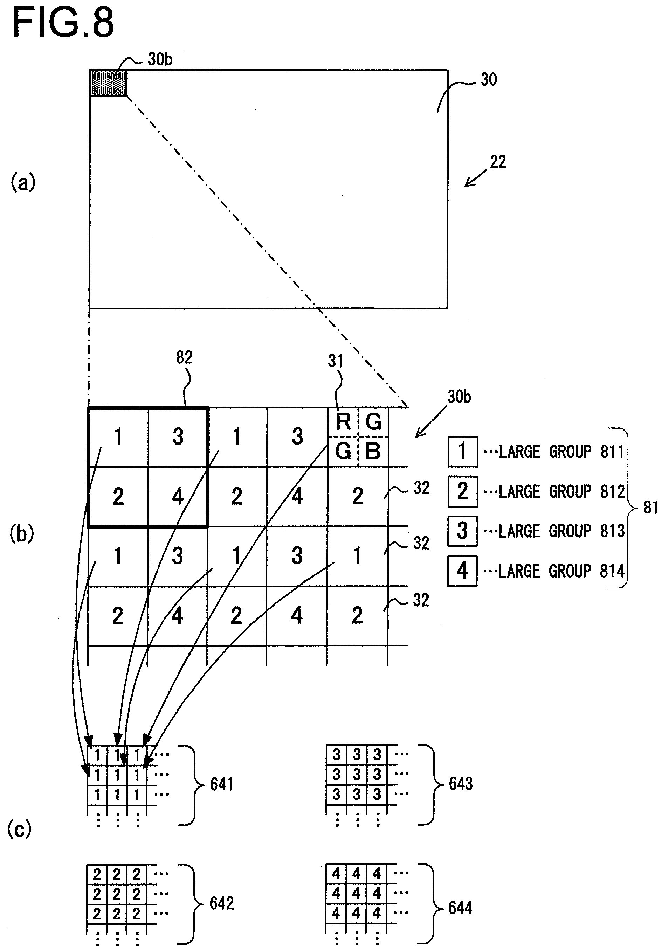

Fig. 8(a) schematically shows the imaging surface 30 of the image sensor 22. Moreover Fig. 8(b) is a schematic figure showing an enlarged partial region 30b of this imaging surface 30. With the still image capture function B, the plurality of unit groups 32 that are arranged two dimensionally are further classified into a plurality of large groups 81. At this time, the unit groups 32 that belong to some large group 81 are classified as unit groups 32 so as to be arranged uniformly over the entire imaging surface 80. For example, in Fig. 8(b), all of the unit groups 32 are divided into blocks 82 each made up from four 2×2 unit groups 32, and the unit group 32 at the upper left of each of the blocks 82 is classified as belonging to a first large group 811, the unit group 32 at the lower left of each of the blocks 82 is classified as belonging to a second large group 812, the unit group 32 at the upper right of each of the blocks 82 is classified as belonging to a third large group 813, and the unit group 32 at the lower right of each of the blocks 82 is classified as belonging to a fourth large group 814. It should be understood that, in Fig. 8(b), one schematically shown square represents a single unit group 32, and the numeral within that square specifies the type of the large group 81 to which that unit group 32 belongs.

For the main capturing, the control unit 23 sets different imaging conditions for the unit groups 32 that belong to the first large group 811, for the unit groups 32 that belong to the second large group 812, for the unit groups 32 that belong to the third large group 813, and for the unit groups 32 that belong to the fourth large group 814. For example, the main capturing may be performed by setting mutually different values of shutter speed. While, in the explanation of the image capture processing, it has been described that the control unit 23 creates the image information 64 so that the brightness becomes uniform over the entire screen image, in this case, it is arranged for the control unit 23 to create the image information 64 so that the brightness becomes uniform for each of the unit groups 32 that belong to the same large group 81. The control unit 23 records the image information that has been captured in this manner in the image file 40. The image information that is recorded here is intended to employ all the pixel values in the large groups 81 collectively, as schematically shown in Fig. 8(c).

For example, as shown in Fig. 8(c), if only the pixel values that correspond to the unit groups 32 belonging to the first large group 811 are extracted from the image information 64 and are arranged two dimensionally, then first image information 641 is obtained that has the pixel values of 1/4 of the number of pixels upon the image sensor 22. In a similar manner, if only the pixel values that correspond to the unit groups 32 belonging to the second large group 81 are extracted from the image information 64 and are arranged two dimensionally, then second image information 642 is obtained that has the pixel values of 1/4 of the number of pixels upon the image sensor 22, and in which the same photographic subject 51 as that of the first image information 641 described above is photographed, but is captured under imaging conditions that are different from those of the first image information 641. And third image information 643 and fourth image information 644 can be obtained in a similar manner. These four sets of image information 641, 642, 643, and 644 are all captured images of the same photographic subject 51, but are photographed under mutually different imaging conditions. In other words, as initially described, it may be said that, in a single episode of image capturing, these four still images related to the same photographic subject 51 have been captured simultaneously, but under mutually different imaging conditions.

It should be understood that the image information 64 in the image file 40 is an image in which the pixel outputs from the image capture pixels 31 of the image sensor 22 are arranged according to the positions of the image capture pixels 31. In other words, the processing to create the four sets of image information 641, 642, 643, and 644 described above is performed at the time of reproducing for reading out the image file 40 from the memory card 25, or at the time of developing it. Moreover, the image information 64 is not necessarily only used to create the four sets of image information 641, 642, 643, and 644. If the image information 64 is utilized just as it is (for reproduction or the like), which is not desirable, then, since the imaging conditions are different for each pair of adjacent unit groups 32, accordingly, for example, an unnatural image in which a checkerboard pattern appears will result. However, since the imaging conditions (such as, for example, the Tv value, the Sv value, and so on) are recorded for each of the unit groups 32, accordingly, if development is performed by combining these imaging conditions and the image information 64, it is possible to prevent the occurrence of this type of unnatural image. For example, with a unit group 32 whose exposure value (Ev value) is higher than that of other unit groups 32, development may be performed while keeping its brightness down, as compared with those other unit groups 32.

Although an example has been explained above in which the unit groups 32 were classified into the four large groups 811, 812, 813, and 814, this number "4" is not to be considered as being limitative; the unit groups 32 may be classified into any desired number of large groups 81, so that any desired number of still images may be captured simultaneously. Moreover, the layout of the large groups 81 (i.e. the method of classification of the unit groups 32) is not to be considered as being limited to classification of one each of the 2×2 unit groups 32 into a different single large group 81.

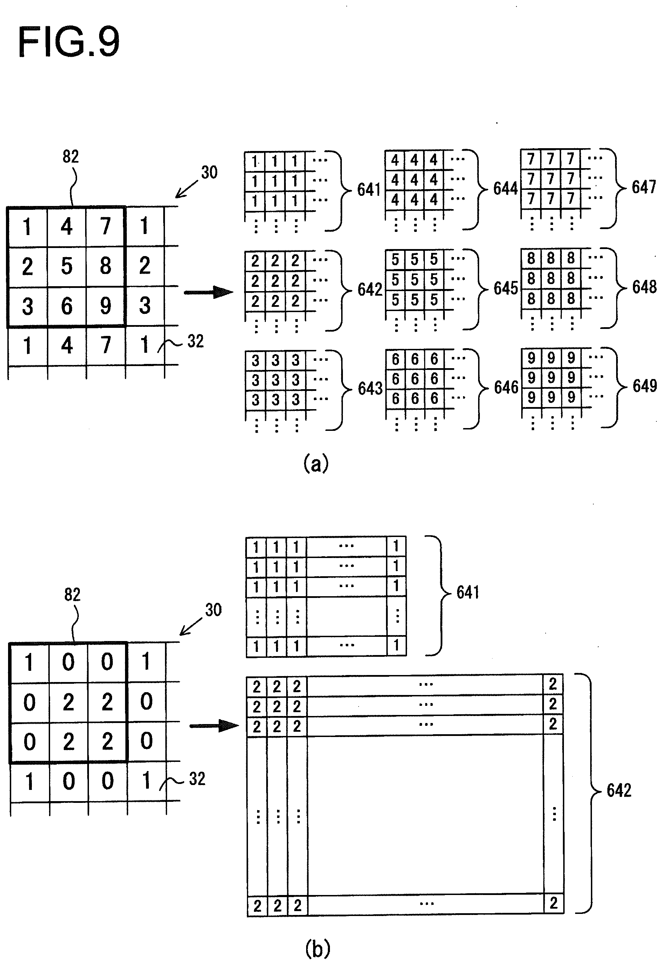

In connection with this point, an example is given in Figs. 9(a) and 9(b). In Fig. 9(a), all of the unit groups 32 are divided into 3×3 groups (a total of nine each), and the nine unit groups 32 included in each 3×3 group are allocated to first through ninth large groups 81. By employing this type of layout, in a single episode of image capturing, it is possible simultaneously to capture nine image 641 through 649 having mutually different imaging conditions. In addition, alternatively, in Fig. 9(b), all of the unit groups 32 are divided into 3×3 groups (a total of nine each), and, in each group, the unit group in the upper left corner is allocated to a first large group 81, while the 2×2 unit groups 32 in the lower right (a total of four each) are allocated to a second large group 81. The remaining four unit groups 32 are not employed for image capturing. By doing this, in a single episode of image capturing, it is possible to capture the two images 641, 642 whose imaging conditions are different at the same time, but the image 642 that corresponds to the second large group 81 is an image having four times as many pixels as compared to the image 641 that corresponds to the first large group 81. In other words, in a single episode of image capturing, it is possible to capture the two images 641 and 642 that have mutually different imaging conditions at the same time, and moreover these two images 641, 642 have mutually different numbers of pixels.

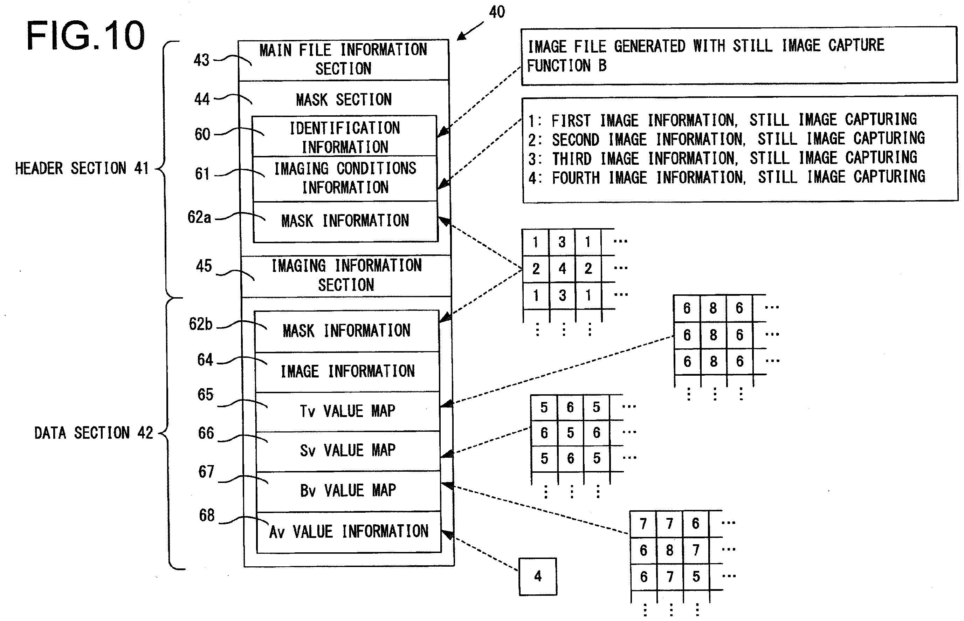

Fig. 10 is a schematic figure showing the structure of the image file 40 generated when images have been captured using the still image capture function B. In the following, the differences from the case of the still image capture function A shown in Fig. 5 will be described in detail.

The identification information 60 specifies that this image file 40 has been created by the still image capture function B. The imaging conditions information 61 is information that specifies what types of applications exist for the unit groups 32. For example, in the still image capture function B, each of the unit groups 32 may have one of the following applications: the application of "being part of the first image information 641", or the application of "being part of the second image information 642", or the application of "being part of the third image information 643", or the application of "being part of the fourth image information 641". The imaging conditions information 61 is information specifying that those four types of application exist for each unit group 32 when creating this image file 40, and specifying a unique number that is allocated to each of these applications. For example, the numbers "1" through "4" may be allocated to the applications "being part of the first through the fourth image information 641 through 644" respectively.

In the still image capture function B, the mask information 62a is information that specifies the application of each unit group 32, in a similar manner to the case of the still image capture function A. In other words, the mask information 62a is "information in which the numbers allocated to the imaging conditions information 61 are expressed in the form of a two dimensional map so as to be matched to the positions of the unit groups 32". For example, if the number "1" is written at the coordinates (3,5) of the mask information 62a, then it will be understood that the unit group 32 at the coordinates (3,5) belongs to the first large group 811, in other words that this unit group 32 is part of the first image information 641.

It should be understood that, in this embodiment, the large group 81 that has the number "0" is a special large group 81 that specifies that its unit groups 32 have not been employed in image capturing. In other words, a unit group 32 that has been allocated the number "0" in the mask information 62a is not used for imaging (its image signal is not read out during the main capturing), and this means that information related to that unit group 32 is not included in the image information 64 recorded in the data section 42 (or that information which is not valid is recorded as information related to that unit group 32).

For example, if it is sufficient for image capturing to be possible under imaging conditions of three types simultaneously, and it is not necessary to perform image capturing under four types of imaging conditions, then, among the unit groups shown in Fig. 8(b), the number "0" may be allocated in the mask information 62a for the unit groups 32 for which "4" is written.

The structure of the data section 42 is the same as in the case of the still image capture function A. In other words, the mask information 62b, the image information 64, the Tv value map 65, the Sv value map 66, the Bv value map 67, and the Av value information 68 are stored in the data section 42. Moreover, the mask information 62b is the same information as the mask information 62a that is stored in the mask section 44.

It should be understood that, as the mask information 62b, it would also be acceptable to arrange to store, not the same information as the mask information 62a of the mask section 44, but information specifying whether each of the unit groups 32 is valid or invalid. For example, it would also be acceptable to arrange to allocate the number "0" to the unit groups 32 that are not employed for image capturing (i.e. from which the image signals during image capturing are not read out), to allocate the number "1" to the unit groups that are employed for image capturing (i.e. from which the image signals during image capturing are read out), and to store a map in which these numbers are arranged two dimensionally to match the positions of the unit groups 32 in the data section 42 as the mask information 62b. This is the same as in the cases of the video image capture function B and of the mixed image capture function, to be described hereinafter.

By performing image capturing using the still image capture function B as described above, the control unit 23 records upon the memory card 25 an image file 40 in which the image information 64 generated by the image sensor 22 that is capable of setting the imaging conditions for each of the unit groups 32, and data related to the imaging conditions for each of the unit groups 32 (i.e. the imaging conditions information 61, the mask information 62, the Tv value map 65, the Sv value map 66, the Bv value map 67, and so on) are mutual correspondence.

### (4) The video image capture function B (a plurality of video images)

A video image capture function B is a function for, in a single episode of image capturing, capturing a plurality of video images related to the same photographic subject simultaneously under imaging conditions that are mutually different. The difference from the still image capture function B is the feature that it is video images that are captured, not still images. Although this is a case of capturing video images, as in the case of the video image capture function A, the unit groups 32 that are classified into some large group 81 are not classified into large groups 81 that are different for each frame. However, depending upon the setting of the frame rate, in some cases, a unit group 32 that is included in some frame (i.e. that is valid in some frame) is not included in another frame (i.e. carries invalid in that other frame). In the following, the video image capture function B will be explained separately for different frame rate settings.

### (4-1) When the frame rates are uniform for all the large groups 81

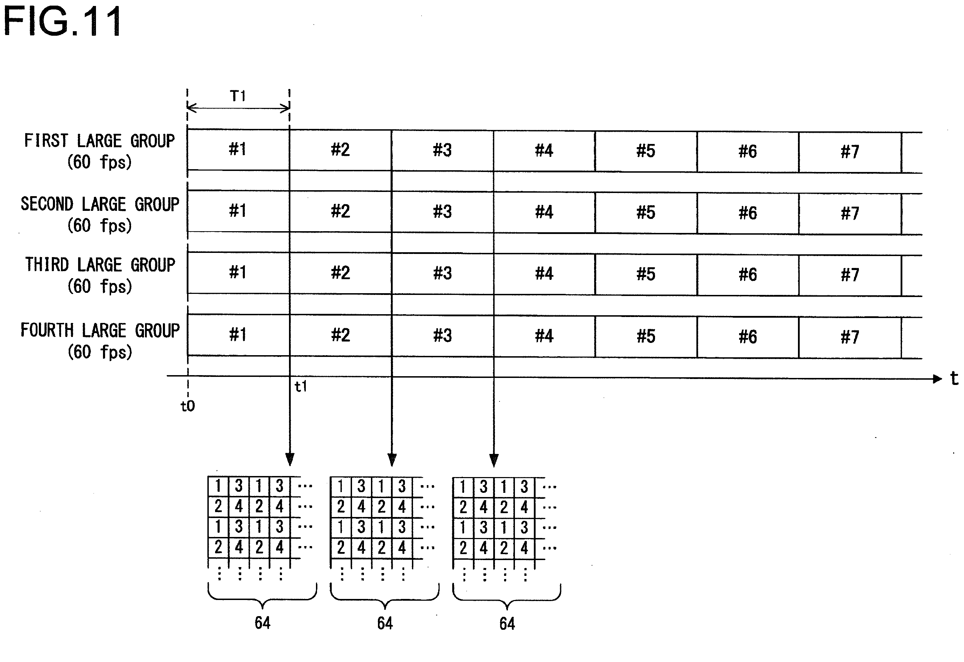

Fig. 11 is a figure for explanation of a video image capture function B in the case in which the frame rates are the same for all of the large groups 81. In this case, the imaging conditions that are different for each of the large groups 81 are the imaging conditions other than frame rate (for example shutter speed and so on). Thus, even though the exposure times may be different, since the frame rates, in other words the cycles at which the signals are read out, are the same, accordingly, for all of the large groups 81, the reading out of the image signals is performed at a predetermined period T1 that corresponds to the frame rate.

Since image capturing is performed at the same frame rate for all of the unit groups 32, accordingly all of the unit groups 32 are used for image capturing for all of the frames. To put it in another manner, for all of the frames, the image signals from all of the unit groups 32 are read out, and the image signals that have thus been read out from all of the unit groups 32 are included in the image information 64. As an example, first image information 64 may be created at a time point t1 after just the predetermined period T1 from the start time point t0 of image capturing. This image information 64 includes a first frame image of a first large group 81 (the frame designated as "#1" in Fig. 11, and the same subsequently), a first frame image of a second large group 81, a first frame image of a third large group 81, and a first frame image of a fourth large group 81. The same applies to the second and subsequent sets of image information 64.

### (4-2) When the frame rates are not uniform for each of the large groups 81

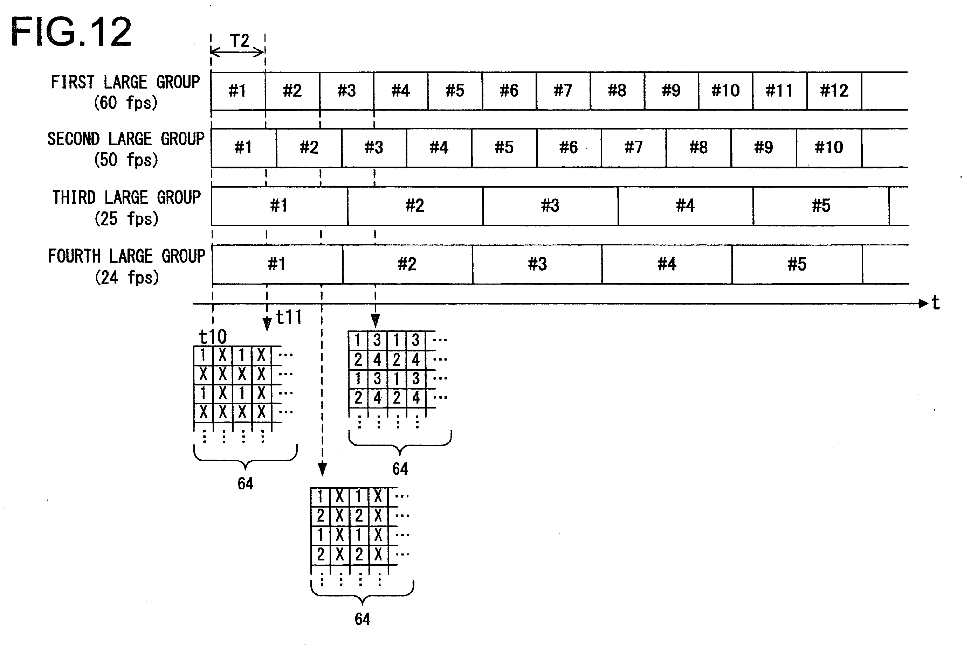

Fig. 12 is another figure for explanation of the video image capture function B, in the case in which mutually different frame rates are set for all of the large groups 81. In this example, frame rates of 60 fps, 50 fps, 24 fps, and 25 fps are respectively set for the first large group 811, the second large group 812, the third large group 813, and the fourth large group 814.

In this manner, when the frame rates of the large groups 81 are different from one another, the control unit 23 records each frame with reference to the fastest frame rate. In other words, the image information 64 is recorded on a predetermined cycle T2 (period about 16.7 milliseconds) corresponding to 60 fps. For example, at the time point t11 after just the predetermined period T2 from the start time point t0 of image capturing, image information 64 is created based on the image signals that have been read out from the unit groups 32 belonging to the first large group 811, and is recorded in an image file 40. Since at this time point t11, reading out of the first frame of image signals in the other large groups 812, 813, and 814 has not yet been performed, accordingly those image signals are not included in this image information 64. It should be noted that, in Fig. 12, the fact that image signals are not read out from specified unit groups 32 and that such image signals are not included in the image information is shown by the symbol "X".

At the time point t12, which is after the predetermined period T2 from the time point t11, not only the second main capturing of the first large group 811 (i.e. the second frame thereof), but also the first main capturing of the second large group 812 (at 50 fps) (i.e. the first frame thereof) has been completed. Accordingly, the control unit 23 records the image signals read out from the unit groups 32 that belong to the first large group 811 and the image signals read out from the unit groups 32 that belong to the second large group 812 in the image file 40. The image signals from the unit groups 32 that belong to the third large group 813 and the image signals from the unit groups 32 that belong to the fourth large group 814 are not read out, and also are not recorded in the image file 40.

In this manner, when the frame rates of the large groups 81 are mutually different, in some cases a portion of the image information 64 will be missing (i.e. being invalid). With the mask information 62b recorded for each frame, the control unit 23 indicates that the image signals corresponding to specified unit groups 32 are not included in the image information 64. The concrete structure of the mask information 62b will be described hereinafter.

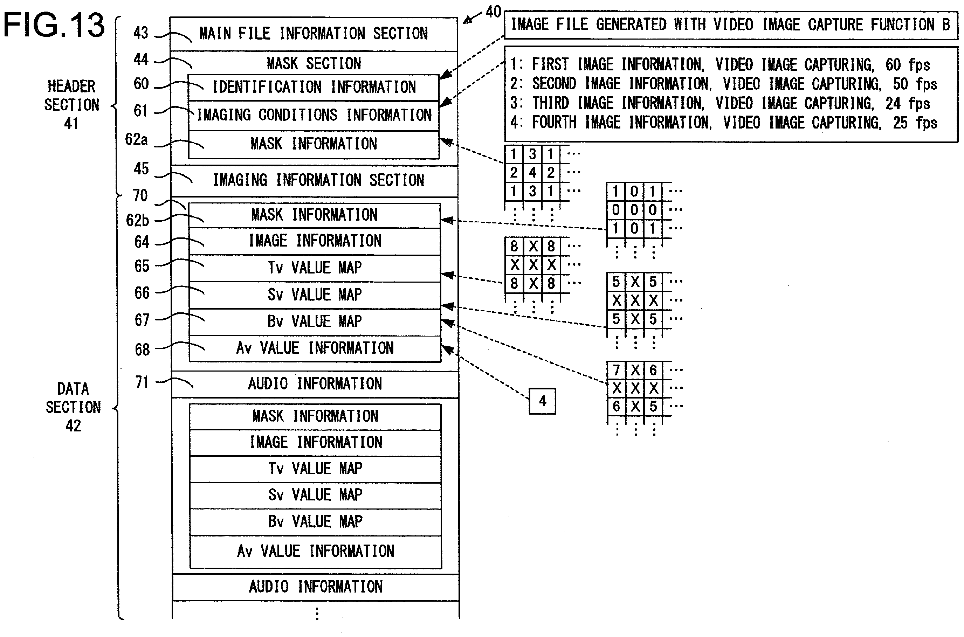

Fig. 13 is a schematic figure showing the structure of an image file 40 generated during image capturing using the video image capture function B. In the following, the differences from the case of the video image capture function A shown in Fig. 7 and the still image capture function shown in Fig. 10 will be described in detail.

The identification information 60 specifies that this image file 40 is one that has been created by using the video image capture function B. The imaging conditions information 61 is information specifying what type of applications exist for the unit groups 32. The imaging conditions information 61 for the video image capture function B may be obtained by adding a frame rate to the imaging conditions information 61 for the still image capture function B. In other words, when creating this image file 40, the imaging conditions information 61 is information that specifies, for example, that for the unit groups 32 there exist the following four types of application, i.e. "part of first image information 641 that is a video image at 60 fps", "part of second image information 642 that is a video image at 50 fps", "part of third image information 643 that is a video image at 24 fps", and "part of fourth image information 641 that is a video image at 25 fps", and that specifies a unique number allocated to each of these applications. For example, the numbers "1" through "4" may respectively be allocated to the applications "parts of the first through the fourth image information 641 through 644".

In the video image capture function B, in a similar manner to the case with the still image capture function B, the mask information 62a is information that specifies the application of each of the unit groups 32. In other words, the mask information 62a is "information in which the numbers allocated to the imaging conditions information 61 are expressed in the format of a two dimensional map, so as to be matched to the positions of the unit groups 32". For example, if the number "1" is present at the coordinates (3,5) in the mask information 62a, then it will be understood that the unit group 32 with the coordinates (3,5) belongs to the first large group 811, in other words is part of the first image information 641.

The structure of the data section 42 is the same as in the case of the video image capture function A. In other words, in the data section 42, blocks 70 each for one frame are stored in the order of image capturing for each frame. A single such block 70 is built up from mask information 62b, image information 64, a Tv value map 65, an Sv value map 66, a Bv value map 67, and Av value information 68. Moreover, along with the block 70 for each frame, audio information 71 is also stored in the data section 42.

Not only the number that is specified by the imaging conditions information 61 described above (for example the number "1" through "4"), but also the number "0" is sometimes stored in the mask information 62b. This number "0" indicates that the unit group 32 is not employed for image capturing in the corresponding frame (i.e. that its image signal is not read out during image capturing). As described above, when a plurality of video images having different frame rates are captured, in some cases, the image signal corresponding to some specified unit group 32 may not be stored in the image information 64 of some frame. In this type of case, the control unit 23 sets the numerical value in the mask information 62 for that frame corresponding to that unit group 32 to "0". Here, for a unit group 32 for which the numerical value in the mask information 62b is set to "0", valid values are not recorded for information other than the image information 64: in other words, a valid Tv value is not recorded in the Tv value map 65, a valid Sv value is not recorded in the Sv value map 66, and a valid Sv value is not recorded in the Bv value map 67.

It should be understood that, for a unit group 32 for which the numerical value in the mask information 62b is set to "0", it would also be acceptable to record the image signal for that unit group 32 in the previous frame in the image information 64. Similarly, the values for the previous frame may be recorded for the Tv value in the Tv value map 65, for the Sv value in the Sv value map 66, and for the Sv value in the Bv value map 67. The same holds for the mixed image capture function that will be described hereinafter.

By performing image capture using the video image capture function B as described above, the control unit 23 records upon the memory card 25 an image file 40 in which the image information 64 generated by the image sensor 22 that is capable of setting the imaging conditions for each of the unit groups 32, and data related to the imaging conditions for each of the unit groups 32 (i.e. the imaging conditions information 61, the mask information 62, the Tv value map 65, the Sv value map 66, the Bv value map 67, and so on) are mutual correspondence.

### (5) The mixed image capture function (video images and still images)

A mixed image capture function is a function that combines the still image capture function B and the video image capture function B, and is a function for simultaneously, in a single episode of image capturing, capturing still images and video images related to the same photographic subject under mutually different imaging conditions.

In the mixed imaging function, the control unit 23 further classifies the plurality of unit groups 32 that are arranged in a two dimensional manner into a plurality of large groups 81, in a similar manner to the case with the still image capture function B and the case with the video image capture function B. With some of the large groups 81, the control unit 23 performs video image capturing in the same manner as in the case for the video image capture function B. And, during this video image capturing, the control unit 23 also performs still image capturing using the remaining large groups 81 in the same manner as in the case for the still image capture function B. This still image capturing may, for example, be performed repeatedly on a fixed cycle (automatic image capturing), or alternatively may be performed according to specific actuation executed by the user (manual image capturing).

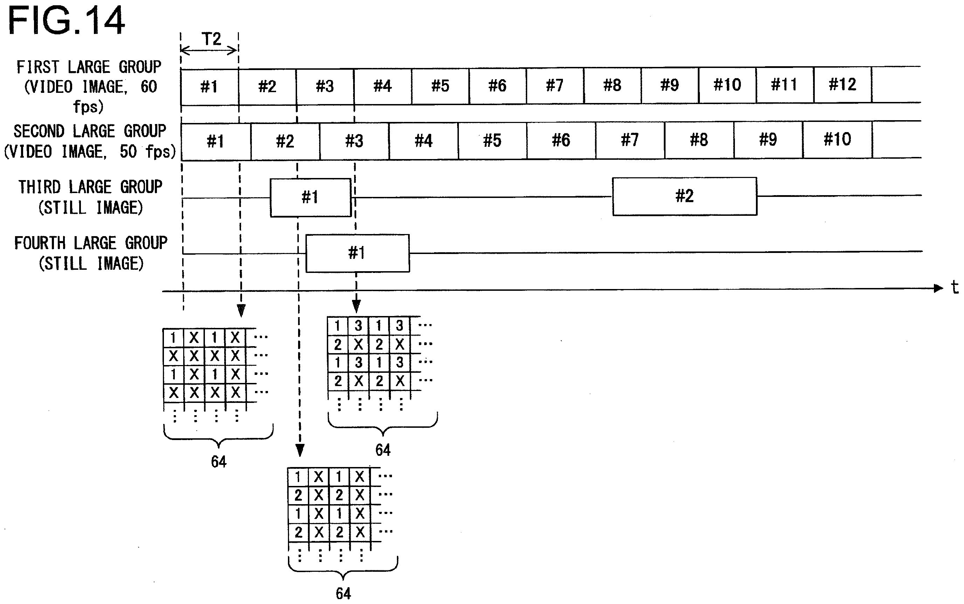

Fig. 14 is a figure for explanation of the mixed imaging function. Here, it is supposed that there are four large groups 811 through 814, and that, among these, video image capturing at 60 fps is being performed with the first large group 811, video image capturing at 50 fps is being performed with the second large group 812, and still image capturing is being performed with the third and fourth large groups 813 and 814.

In a similar manner to the case with the video image capture function B, the control unit 23 records each frame by taking the fastest frame rate (in this example, 60 fps) as reference. While no still image is being captured, the control unit 23 does not perform any reading out of the image signals for the unit groups 32 that belong to the third and the fourth large groups 813, 814. In other words, the image information 64 that is recorded for each frame does not include any image signals for the unit groups 32 belonging to the third and the fourth large groups 813, 814 that correspond to still images. However, when capturing of a still image has been performed, the control unit 23 includes the image signals that have been read out by performing still image capturing in the image information 64 that corresponds to the frame directly after the timing at which still image capturing has been completed (i.e., the timing at which the image signals from the unit groups 32 belonging to the third and the fourth large groups 813, 814 have been read out).

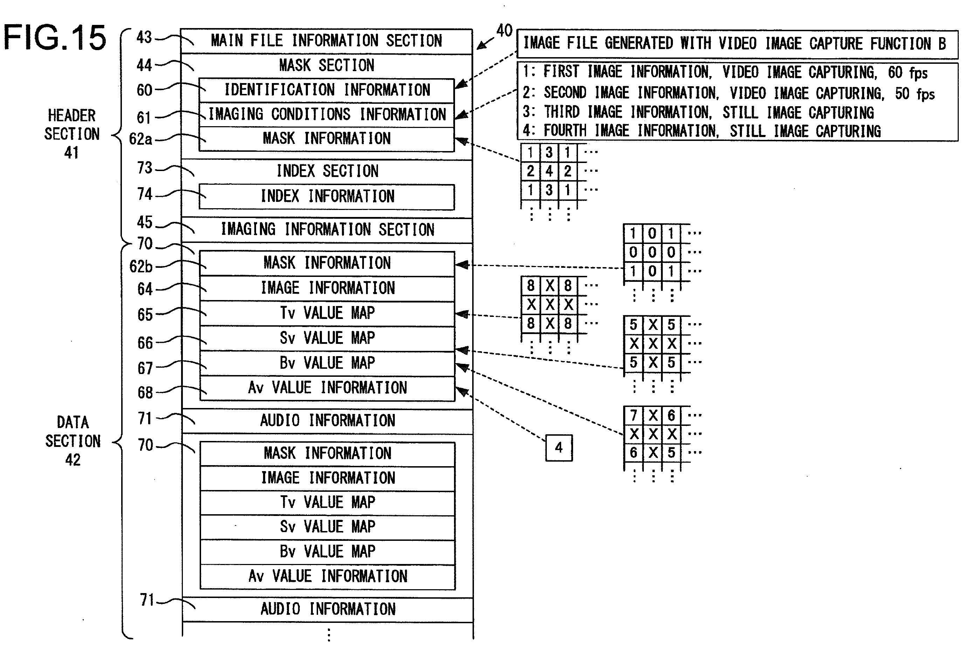

Fig. 15 is a schematic figure showing the structure of an image file 40 generated when image capturing has been performed using the mixed image capture function. In the following, the differences from the case of the video image capture function B shown in Fig. 13 will be described in detail.

The identification information 60 indicates that this image file 40 is one that has been created by the mixed image capture function. The imaging conditions information 61 is information that specifies what types of applications exist for the unit groups 32. In the mixed image capture function, for example, the imaging conditions information 61 may be information that specifies that for the unit groups 32 there exist the following four types of application, i.e. "part of first image information 641 that is a video image at 60 fps", "part of second image information 642 that is a video image at 30 fps", "part of third image information 643 that is a still image", and "part of fourth image information 641 that is a still image", and that specifies a unique number allocated to each of these applications. For example, the numbers "1" through "4" may respectively be allocated to the applications "parts of the first through fourth image information 641 through 644".

In the mixed image capture function, in a similar manner to the case with the video image capture function B, the mask information 62a is information that specifies an application for each of the unit groups 32. In other words, the mask information 62a is "information in which the numbers allocated to the imaging conditions information 61 are expressed in the format of a two dimensional map, so as to be matched to the positions of the unit groups 32". For example, if the number "1" is present at the coordinates (3,5) in the mask information 62a, then it will be understood that the unit group 32 with the coordinates (3,5) belongs to the first large group 811, in other words is part of the first image information 641.

In the mixed image capture function, an index section 73 is further added to the header section 41. Index information 74 is recorded in the index section 73 specifying in which of the blocks 70 still images are stored, among the plurality of blocks 70 (respectively correspond to a plurality of frames) that are recorded in the data section 42. For example, one through a plurality of items of information (just the number of times that still image capturing has been performed) such as "a still image is included in the third image information 643 included in the fifth frame of image information 64" may be included in the index information 74. This index section 73 is provided in order to make it possible quickly to search for still images from among the large number of blocks 70.

It should be understood that it would also be acceptable for the index information 74 not to specify the position at which a still image is recorded based on frame number. For example, it would also be possible for the position at which a still image is recorded to be specified based on the reproduction time of a video image. In this case, for example, the index information 74 may be information such as "a still image is included in the third image information 643 included in the image information 64 at the time point 3 minutes 15 seconds".

Each time capturing of a still image is performed during image capturing using the mixed image capture function, the control unit 23 adds the frame number and the time point that capturing of the still image was performed in the index section 73 as index information 74. It should be understood that it would also be acceptable to arrange not directly to add this information into the index section 73 of the image file 40 upon the memory card 25, but temporarily to store it in the DRAM 27, and to transfer the information within the DRAM 27 to the index section 73 of the image file 40 within the memory card 25 when the mixed image capture function ends.

The structure of the data section 42 is the same as in the case of the video image capture function B. In other words, a block 70 for one frame is stored in order of image capturing in the data section 42. A single block 70 is built up from mask information 62, image information 64, a Tv value map 65, an Sv value map 66, a Bv value map 67, and Av value information 68. Moreover, audio information 71 is also stored in the data section 42 together with the block 70 for each frame.

By performing image capturing using the mixed image capture function as described above, the control unit 23 records upon the memory card 25 an image file 40 in which the image information 64 generated by the image sensor 22 that is capable of setting the imaging conditions for each of the unit groups 32, and data related to the imaging conditions for each of the unit groups 32 (i.e. the imaging conditions information 61, the mask information 62, the Tv value map 65, the Sv value map 66, the Bv value map 67, and so on) are mutual correspondence.

Next, the image reproduction processing (i.e. development processing) performed by the control unit 23 will be explained. This image reproduction processing is processing for generating an image of the photographic subject from an image file 40 that has been recorded upon the memory card 25 by one of the various image capture functions described above. The control unit 23 may, for example, display the image upon the liquid crystal monitor 24, or may record it upon the memory card 25 as another file that is different from the image file 40 mentioned above.

The control unit 23 opens the image file 40 (refer to Figs. 5, 7, 10, 13, and 15), and first reads out the main file information section 43. By doing this, the offsets and the sizes of the mask section 44 and the data section 42 and so on of the image file 40 are ascertained. Next, the control unit 23 reads out the identification information 60 from the mask section 44 of the image file 40. By doing this, the control unit 23 recognizes the image capture function that this image file 40 was created by. The subsequent processing differs for each image capture function. Accordingly, in the following description, the image reproduction processing for each of the image capture functions described above will be explained.

### (1) The still image capture function A (a single still image)

Upon recognition that the image file 40 is a file that has been created by the still image capture function A shown in Fig. 5, the control unit 23 reads out the imaging conditions information 61 and the mask information 62a from the mask section 44. By doing this, the control unit 23 is able to identify which range (i.e. which of the unit groups 32) among the entire photographic scene is the main photographic subject portion and which is the background portion, and is able to change the image makeup between the main photographic subject portion and the background portion. For example, it is possible to perform edge enhancement processing so that the main photographic subject portion becomes sharper, and it is also possible to emphasize the main photographic subject portion by performing blurring processing upon the background portion.

Next, the control unit 23 reads out the image information 64, the Tv value map 65, the Sv value map 66, the Bv value map 67, and the Av value information 68 from the data section 42. Then, based on the Tv value map 65, the Sv value map 66, the Bv value map 67, and the Av value information 68, the control unit 23 performs so-called development processing upon the image information 64. If the image information 64 is RAW data, then the image processing unit 23, for example, may execute per se known demosaicing processing upon the image information 64 having no color information, and may create an image having color information. Moreover, based on the Sv value map 66 and so on, the control unit 23 performs image processing such as adjustment of color and brightness and so on, and noise reduction and so on. For example, noise is easy to occur for the unit groups 32 whose Sv values are large (i.e. whose sensitivities are high) as compared to other unit groups 32. Accordingly, the control unit 23 increases (i.e. strengthens) the intensity of noise reduction, the larger the Sv value is. The control unit 23, for example, may display the image that has been created as described above upon the liquid crystal monitor 24, or may record it upon the memory card 25.

As described above, when reproducing an image file 40 that has been created using the still image capture function A, before reading out the information recorded in the data section 42 such as the image information 64 and so on, the control unit 23 reads out the imaging conditions information 61 and the mask information 62a these are recorded in the mask section 44. Since the mask section 44 is recorded before the data section 42, accordingly it is possible to minimize seek time generation when the reproduction processing is performed.

It should be understood that, as described above, the same mask information 62b is stored in the data section 42 as the mask information 62a stored in the header section 41. Accordingly, instead of reading out the mask information 62a, the control unit 23 may read out the mask information 62b from the data section 42.

### (2) The video image capture function A (a single video image)

Upon recognition that the image file 40 is a file that has been created using the video image capture function A shown in Fig. 7, the control unit 23 reads out the mask information 62a from the mask section 44. The control unit 23 distinguishes which range (i.e. which of the unit groups 32) among the entire photographic scene is the main photographic subject portion and which is the background portion. And next, the control unit 23 reads out the imaging conditions information 61 from the mask section 44. By doing this, the control unit 23 recognizes the frame rates of the main photographic subject portion and of the background portion. Next, the control unit 23 reads out, in order from the block 70 at the head of the data section 42, the image information 64, the Tv value map 65, the Sv value map 66, the Bv value map 67, and the Av value information 68, and creates the frames that make up the video image.

When creating each frame, the control unit 23 first reads out the mask information 62b from the block 70. And, in that frame, the control unit 23 identifies which range (i.e. which of the unit groups 23) is the main photographic subject portion, or which is the background portion. Thereafter, the control unit 23 performs different image processing for the main photographic subject portion and for the background portion, as explained in connection with the still image capture function A. The control unit 23 may, for example, display the video image made from the frame that is created in the above manner upon the liquid crystal monitor 24, or may record it upon the memory card 25.

As described above, when reproducing an image file 40 that has been created using the video image capture function A, the control unit 23 reads out the mask information 62b recorded in the block 70 first, before reading out the image information 64 and so on. Since the mask information 62b is recorded before the image information 64 and so on, accordingly it is possible to minimize seek time generation when the reproduction processing is performed.

It should be understood that, since the mask information 62b at the head of the block in the data section 42 and the mask information 62a recorded in the mask section 44 are the same information, accordingly it would be acceptable to arrange for the control unit 23 not to read out the mask information 62a from the mask section 44.

### (3) The still image capture function B (a plurality of still images)

Upon recognition that the image file 40 is a file that has been created using the still image capture function B shown in Fig. 10, the control unit 23 reads out the imaging conditions information 61 and the mask information 62a from the mask section 44. By doing this, the control unit 23 identifies what types of still images have been simultaneously captured, and also which unit groups 32 make up which still images. In other words, the control unit 23 identifies how many large groups 81 exist, and to which large group 81 each unit group 32 belongs.

Next, the control unit 23 reads out the image information 64, the Tv value map 65, the Sv value map 66, the Bv value map 67, and the Av value information 68 from the data section 42. And for each large group 81, based on the Tv value map 65, the Sv value map 66, the Bv value map 67, and the Av value information 68, the control unit 23 executes so-called development processing upon the image information 64, and generates a still image. By doing this, a plurality of still images (for example, four still images) are generated. The control unit 23 may, for example, display the still images created in the above manner upon the liquid crystal monitor 24, or may record them upon the memory card 25.

As described above, when reproducing an image file 40 that has been created using the still image capture function B, the control unit 23 reads out the imaging conditions information 61 and the mask information 62a recorded in the mask section 44 first, before reading out the information recorded in the data section 42 such as the image information 64 and so on. Since the mask section 44 is recorded before the data section 42, accordingly it is possible to minimize seek time generation when the reproduction processing is performed.

It should be understood that, as previously described, the same mask information 62b is stored in the data section 42 as the mask information 62a that is stored in the header section 41. Accordingly, instead of reading out the mask information 62a, it will also be acceptable to arrange to read out the mask information 62b from the data section 42.

### (4) The video image capture function B (a plurality of video images)

Upon recognition that the image file 40 is a file that has been created using the video image capture function B shown in Fig. 13, the control unit 23 reads out the imaging conditions information 61 and the mask information 62a from the mask section 44. By doing this, the control unit 23 identifies what types of video images have been simultaneously captured and which unit groups 32 make up which video images, and also the frame rates of the video images. In other words, the control unit 23 identifies how many large groups 81 exist, to which large group 81 each unit group 32 belongs, and which large groups 81 have captured images at what frame rates. And next, the control unit 23 reads out the image information 64, the Tv value map 65, the Sv value map 66, the Bv value map 67, and the Av value information 68 in order from the head block 70 of the data section 42, and generates the frames that make up the video images.

When creating each frame, the control unit 23 first reads out the mask information 62b from the block 70. And the control unit 23 identifies to which large groups 81 the pixel signals included in the image information 64 of that block 70 correspond. Thereafter, although the control unit 23 creates frames corresponding to those large groups 81, it does not create any frames for the large groups 81 in which no pixel signals in the image information 64 for that block 70 are included. The control unit 23 may, for example, display the video images made from the frames created in the above manner upon the liquid crystal monitor 24, or may record them upon the memory card 25.

As described above, when reproducing an image file 40 that has been created using the video image capture function B, the control unit 23 reads out the mask information 61 a, 62b first, before reading out the image information 64 and so on recorded in the block 70. Since the mask information 62a, 62b is recorded before the image information 64 and so on, accordingly it is possible to minimize seek time generation during the reproduction processing.

It should be understood that, since the mask information 62b in the head block of the data section 42 and the mask information 62a recorded in the mask section 44 are the same information, accordingly it would also be acceptable to arrange for the control unit 23 not to read out the mask information 62a from the mask section 44.

### (5) The mixed image capture function (video images and still images)

Upon recognition that the image file 40 is a file that has been created using the mixed image capture function shown in Fig. 15, the control unit 23 reads out the mask information 62a and the imaging conditions information 61 from the mask section 44. By doing this, the control unit 23 identify what types of video images and what types of still images have been simultaneously captured and which unit groups 32 make up which still images and which make up video images, and also the frame rates of the video images. In other words, the control unit 23 identifies how many large groups 81 exist, which large groups 81 are still images and which are video images, if they are video images what their frame rates are, and to which large group 81 each unit group 32 belongs. And next, the control unit 23 reads out the image information 64, the Tv value map 65, the Sv value map 66, the Bv value map 67, and the Av value information 68 in order from the head block 70 of the data section 42, and generates the frames that make up the video images and the still images.

When generating frames of video images or still images, the control unit 23 first reads out the mask information 62b from the block 70. And the control unit 23 identifies to which large groups 81 the pixel signals included in the image information 64 of the block 70 correspond. Thereafter, although the control unit 23 creates frames and still images corresponding to those large groups 81, it does not create any frames or still images for the large groups 81 in which no pixel signals in the image information 64 for that block 70 are included. The control unit 23 may, for example, display the video images made from the frames created in the above manner and the still images upon the liquid crystal monitor 24, or may record them upon the memory card 25.

As described above, when reproducing an image file 40 that has been created using the mixed image capture function B, the control unit 23 reads out the mask information 62a, 62b first, before reading out the image information 64 and so on recorded in the block 70. Since the mask information 62a, 62b is recorded before the image information 64 and so on, accordingly it is possible to minimize seek time generation during the reproduction processing.

It should be understood that, since the mask information 62b in the head block of the data section 42 and the mask information 62a recorded in the mask section 44 are the same information, accordingly it would also be acceptable to arrange for the control unit 23 not to read out the mask information 62a from the mask section 44

While the image reproduction processing has been described as being processing that employs the various image capture functions described above in order to create an image of the photographic subject from an image file 40 that is recorded upon the memory card 25, it would also be acceptable for the image reproduction processing to be processing to create a still image or a video image for an image file 40 before it is recorded upon the memory card 25. It would also be acceptable to arrange for the control unit 23 to perform compression processing, after having created the still image or the video image.

Moreover, it should be understood that it would also be acceptable to arrange for an electronic device (subsequently this will be termed a "reproduction device") that is different from the image capturing device 10 to execute the reproduction processing described above. For example, it would be possible to arrange for the memory card 25 to be removed from the image capturing device 10, and, when the memory card 25 is installed to a reproduction device such as a PC or the like that is provided externally to the image capturing device 10, for the reproduction device to read out an image file 40 from the memory card 25, to execute the reproduction processing described above, and thus to reproduce the image. Furthermore, it would also be possible to arrange for transfer of the image information 64 and so on to be performed by performing data communication such as wireless communication or the like between the image capturing device 10 and a reproduction device.

With the image capturing device according to the first embodiment described above, the following beneficial effects are obtained.
(1) The control unit 23 functions as a processing unit that performs image processing for each of a plurality of unit groups 32 (i.e. imaging regions) in an image, using imaging conditions for each of the plurality of unit groups 32. Since this is done, accordingly it is possible to perform image processing while taking into consideration the imaging conditions for each of the unit groups 32, and it is possible to provide an electronic device whose convenience of use is excellent.
(2) The control unit 23 develops the image based on the distribution diagram of imaging conditions. Since this is done, accordingly it is possible to perform image processing while taking into consideration the imaging conditions for each of the unit groups 32, and it is possible to provide an electronic device whose convenience of use is excellent.
(3) Based on the distribution diagram of imaging conditions, the control unit 23 creates the Sv map 66, which is a correction amount map. Since this is done, accordingly it is possible to develop image data in which the image of the photographic subject is well recreated.
(4) The control unit 23 records an image that has been corrected so as to be a predetermined range. Since this is done, accordingly it is possible to reproduce an image whose dynamic range is broad, and in which white-clipping and black-clipping do not occur.
(5) The image sensor 22 has a plurality of unit groups 32 (i.e. imaging regions), and is adapted to be capable of setting imaging conditions for each of these unit groups 32. And, along with functioning as a measurement unit that measures the Bv values for each of the plurality of unit groups 32 as imaging conditions, the control unit 23 also functions as a correction amount generation unit that creates a distribution diagram of Sv values, which are correction amounts that are calculated so that at least one measured value, among the Bv values that have been measured for the plurality of unit groups 32, comes within a predetermined range. According to this type of image capturing device 10, from the measured values that have been measured for each of the unit groups 32, it is possible to obtain information for keeping these measured values within a desired range.
(6) The control unit 23 functions as an image data generation unit that generates image information 64 (i.e. image data) upon which correction has been performed based on the distribution diagram of Sv values that has been generated. Since this is done, accordingly it is possible to obtain image data from the measured values that have been measured for each of the unit groups 32, whose measured values have been kept within a desired range.
(7) The control unit 23 functions as a recording unit that records the image information 64 that has been generated and the distribution diagram of Sv values upon the memory card 25. Since this is done, accordingly it becomes possible simply and easily to generate an image whose dynamic range is broad.
(8) The control unit 23 functions as an imaging conditions generation unit that creates the distribution diagram of Bv values based on the Bv values that have been measured for the plurality of unit groups 32. Since this is done, accordingly it becomes possible simply and easily to generate an image whose dynamic range is broad.
(9) The image sensor 22 has the plurality of unit groups 32 (i.e. imaging regions), and is adapted to be capable of setting imaging conditions for each of those unit groups 32. And the control unit 23, along with functioning as a measurement unit that measures the Bv values which are imaging conditions for each of the plurality of unit groups 32, also functions as an image data generation unit that generates image data by controlling the image sensor 22 to perform image capturing for the plurality of unit groups 32, so that at least one measured value, among the Bv values that have been measured, comes to be within a predetermined range. According to this type of image capturing device 10, from the measured values that have been measured for each of the unit groups 32, it is possible to obtain information for keeping these measured values within a desired range.
(10) The control unit 23 records the Bv values that have been measured upon the memory card 25. Since this is done, accordingly it becomes possible simply and easily to generate an image whose dynamic range is broad.
(11) The control unit 23 functions as an imaging conditions generation unit that generates a distribution diagram of Bv values based on the Bv values that have been measured for the plurality of unit groups 32. And the control unit 23 records the distribution diagram of Bv values that has thus been generated upon the memory card 25. Since this is done, accordingly it becomes possible simply and easily to generate an image whose dynamic range is broad.
(12) The control unit 23 functions as a correction amount generation unit that generates a distribution diagram of Sv values for the plurality of unit groups 32, which are correction amounts that are calculated so that, of the Bv values that have been measured, at least one measured value comes within a predetermined range. And the control unit 23 records the distribution diagram of Sv values that has thus been generated upon the memory card 25. Since this is done, accordingly it becomes possible simply and easily to generate an image whose dynamic range is broad.
(13) The image sensor 22 has the plurality of unit groups 32 (i.e. imaging regions), and imaging conditions can be set for each of the unit groups 32. And the control unit 23 records the image information 64 (i.e. image data) generated by the image sensor 22, the imaging conditions information 61 related to the imaging conditions for each of the unit groups 32, and data such as the mask information 62, the Tv value map 65, the Sv value map 66, the Bv value map 67 and so on (imaging conditions data) in mutual correspondence. Since this is done, accordingly it is possible, during reproduction of an image file 40 that is the result of image capture, to know what type of imaging conditions is applied for each pixel.
(14) For example, information related to the exposure when capturing an image of the photographic subject with the image sensor 22, and information related to the brightness of the photographic subject whose image has been captured with the image sensor 22, are included in the information related to the imaging conditions that is recorded in correspondence with the image information 64. In concrete terms, the Bv value map 67 which is information related to the luminance of the photographic subject whose image has been captured with the image sensor 22, the Tv value map 65 which is the time periods for accumulation of electric charge by the photoelectric conversion section not shown in the figures, and the Sv value map 66 which is the amplification ratios by the amplification unit not shown in the figures, are included. It may be said that all of them are information related to a movement of the image sensor 22 during the image capturing. Since this is done, accordingly it is possible to perform more appropriate image processing during reproduction of the image file 40.
(15) In correspondence with the image information 64, the control unit 23 records information relating to the imaging conditions, which change each time image capturing is performed. Since this is done, accordingly it is possible to append appropriate information to each image file 40, and it is possible to perform more appropriate image processing during reproduction of that image file 40.
(16) The control unit 23 records a plurality of sets of information related to imaging conditions, respectively corresponding to the image information 64, in order in time series within a single image file 40. Since this is done, accordingly, when for example a video image is recorded in the image file 40, it is possible to perform image processing based on those sets of information in a simple and easy manner.
(17) In the image file 40 that has the header section 41 and the data section 42 (i.e. the image data portion) in which the image information 64 is recorded, the control unit 23 records the information relating to imaging conditions in at least either one of the header section 41 and the data section 42. Since this is done, accordingly, for example during reproduction of the image file 40, it is possible to know what type of imaging conditions are to be applied for each pixel.
(18) The control unit 23 records the imaging conditions information 61 related to the applications for the plurality of unit groups 32 and the mask information 62 in correspondence with the image information 64. Since this is done, accordingly, for example during reproduction of the image file 40, it is possible to know what type of imaging conditions are to be applied for each pixel.
(19) The mask information 62 includes dynamic information that changes along with the passage of time. In concrete terms, information specifying whether or not pixel values corresponding to pixel signals that have been read out from image capture pixels 31 belonging to the unit groups 32 are included, or information specifying into which of a plurality of groups that are mutually different each of the plurality of unit groups 32 should be classified, is included in the image information 64. Since this is done, accordingly, for example during reproduction of the image file 40, it is possible to perform image processing while utilizing this dynamic information.
(20) The mask information 62 includes static information that does not change along with the passage of time. In concrete terms, it includes information that specifies the roles of the plurality of unit groups 32. Moreover, the mask information 62a includes information that specifies, at the beginning of image capturing, into which of the plurality of groups that are mutually different each of the plurality of unit groups 32 should be classified. Since this is done, accordingly, for example during reproduction of the image file 40, it is possible to perform image processing while utilizing this static information.
(21) The control unit 23 records the plurality of sets of mask information 62b corresponding to the plurality of sets of image information 64 in order in time series within the single image file 40. Since this is done, accordingly, for example during reproduction of the image file 40, it is possible to track the imaging conditions in order in time series.
(22) In the image file 40 that has the header section 41 and the data section 42 (i.e. the image data portion) in which the image information 64 is recorded, the control unit 23 records the mask information 62 in at least one of the header section 41 and the data section 42. Since this is done, accordingly, for example during reproduction of the image file 40, it is possible to know what type of imaging conditions are to applied to each of the pixels.
(23) The unit groups 32 that capture an image at a first frame rate and the unit groups 32 that capture an image at a second frame rate that is slower than the first frame rate are included in the plurality of unit groups 32, and the control unit 23 records the plurality of sets of image information 64 based on the first frame rate. Since this is done, it is possible reliably to record information related to all of the frames without any loss.
(24) The control unit 23 records the audio information 71 (i.e. audio data) corresponding to an capturing interval of a plurality of sets of image information 64 in correspondence with that plurality of sets of image information 64. Since this is done, accordingly it becomes possible to perform video image reproduction that also includes audio.
(25) The control unit 23 records at least one of information related to the image capture pattern of the image information 64, information related to the storage format of the image information 64, and information related to the imaging conditions for each of the unit groups 32, in the header section 41 of the image file 40 which is made up of the two blocks, i.e. the header section 41 and the data section 42. Since this is done, accordingly, for example during reproduction of the image file 40, it is possible to know what type of imaging conditions are applied to each of the pixels.

### - Second Embodiment -

An image capturing device according to the second embodiment of the present invention has a structure similar to that of the image capturing device 10 according to the first embodiment, but the methods for recording the image files 40 for the still image capture function B, for the video image capture function B, and for the mixed image capture function are different from those in the first embodiment. In the following, this point will be explained in detail.

As previously described, the still image capture function B, the video image capture function B, and the mixed image capture function are functions in which, in a single episode of image capturing, a plurality of still images and/or video images related to the same photographic subject are captured at the same time. In this embodiment, the control unit 23 divides up and records the plurality of still images and/or video images that have been captured in this manner into a plurality of image files 40, rather than keeping them in a single image file 40. At this time, the control unit 23 records the respective image files 40 that have thus been divided up and recorded in mutual correspondence with one another. Accordingly, although for convenience the plurality of image files 40 are recorded as individual files, in a similar manner to the case with the first embodiment, the information that these are files that have been obtained by a single episode of image capturing is not lost. To put this in another manner, when subsequently handling this plurality of image files 40, as in the case with the first embodiment, it is possible to recognize and handle them as having been obtained by a single episode of image capturing.

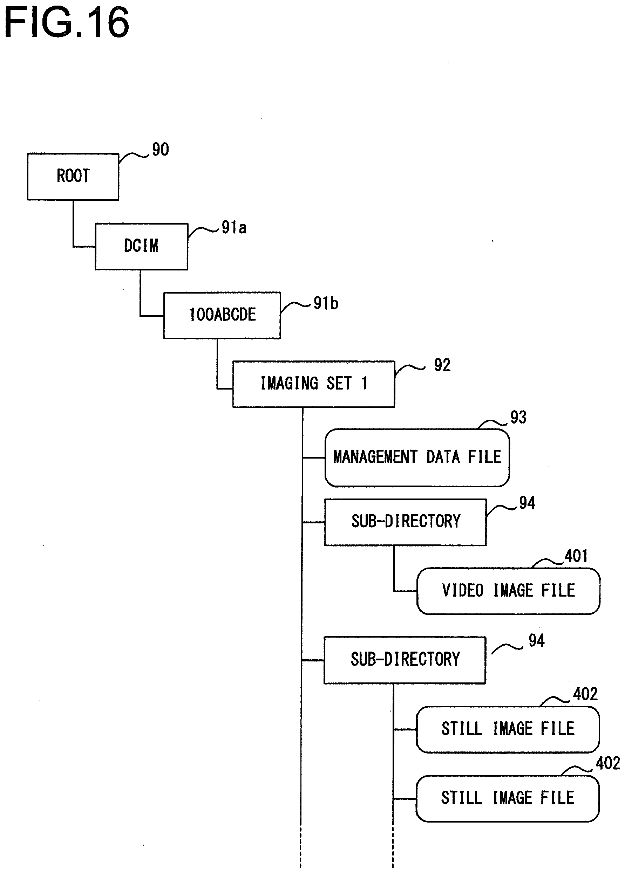

Fig. 16 is a schematic figure showing the directory structure upon the memory card 25. A DCIM directory 91 a is present in the root directory 90 of the memory card 25. Moreover, a sub-directory 91 b for image storage is present in the DCIM directory 91 a. Each time of image capturing using the still image capture function B, using the video image capture function B, or using the mixed image capture function, the control unit 23 creates one imaging set directory 92 within this sub-directory 91b. In other words, a single imaging set directory 92 corresponds to a single episode of image capturing.

In the imaging set directory 92, a single management data file 93 and a sub-directory 94 for each application for the unit groups 32 are created. For example, if there are four applications for the unit groups 32, then four sub-directories 94 are created. In each sub-directory 94, at least one image file 40 corresponding to an application for the unit groups 32 is created. For example, if an application for the unit groups 32 is video image capturing, then one only video image file 401 is recorded in a sub-directory 94 corresponding to this application. On the other hand, if an application for the unit groups 32 is still image capture, then still image files 402 for number of image capturing times are recorded in a sub-directory 94 corresponding to this application. It should be understood that since, in the case of the still image capture function B, in a single episode of image capturing, only a single still image file 402 is recorded, accordingly only a single still image file 402 is recorded in each sub-directory 94.

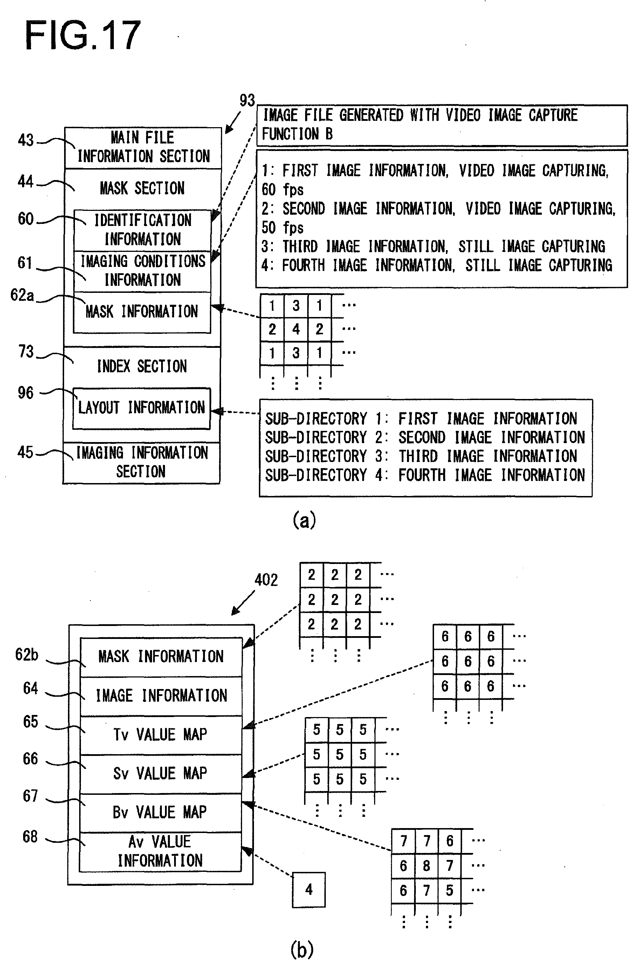

Fig. 17(a) is a schematic figure showing the structure of the management data file 93. The management data file 93 is a file in which information for correlating together the image files 40 recorded in each sub-directory 94 is recorded, and is built up from a main file information section 43, a mask section 44, an index section 73, and a imaging information section 45. The main file information section 43, the mask section 44, and the imaging information section 45 are the same as the sections having the same names in the image file 40 explained in connection with Fig. 15 and so on. And layout information 96 specifying to which application for the unit groups 32 each sub-directory 94 corresponds is recorded in the index section 73.

Fig. 17(b) is a schematic figure showing the structure of a still image file 402 recorded in a sub-directory 94. Mask information 62b, image information 64, a Tv value map 65, an Sv value map 66, a Bv value map 67, and Av value information 68 are recorded in the still image file 402. Since the Av value information 68 is the same as explained with reference to Fig. 10, accordingly explanation thereof will be omitted.

Each of the mask information 62b, the image information 64, the Tv value map 65, the Sv value map 66, and the Bv value map 67 is information including only values corresponding to a single large group 18, extracted from the information of the same name explained with reference to Fig. 10 and arranged in a two dimensional manner. For example, for the image file 40 explained in Fig. 10, the mask information 62b is "information in which the numbers allocated to the imaging conditions information 61 are expressed in the format of a two dimensional map, so as to be matched to the positions of the unit groups 32", and the number of values included in the mask information 62b is the same as the number of unit groups 32. By contrast, the mask information 62b in the still image file 402 is information including only the values corresponding to the large group 81 that corresponds to the sub-directory 94, extracted from all those values and expressed in the format of a two dimensional map. In a similar manner for the image information 64, the Tv value map 65, the Sv value map 66, and the Bv value map 67, these include only the values corresponding to that single large group 81 in the single still image file 402.

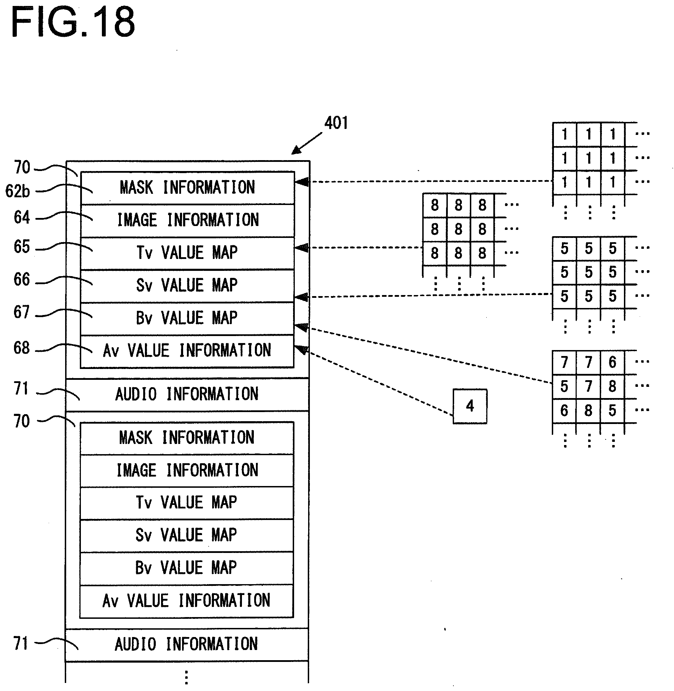

Fig. 18 is a schematic figure showing the structure of a video image file 401 that is recorded in the sub-directory 94. In the video image file 401, for each frame, a block 70 for one frame is stored in order of image capturing. A single block 70 is built up from mask information 62b, image information 64, a Tv value map 65, an Sv value map 66, a Bv value map 67, and Av value information 68. Moreover, along with the block 70 for each frame, audio information 71 is also stored in the video image file 401. Since the Av value information 68 is the same as explained with reference to Fig. 13, accordingly explanation thereof will be omitted.

Each of the mask information 62b, the image information 64, the Tv value map 65, the Sv value map 66, and the Bv value map 67 is information including only values corresponding to a single large group 18, extracted from the information of the same name explained with reference to Fig. 13 and arranged in a two dimensional manner. Since this feature is the same as in the case of the still image file 402 described above, accordingly explanation thereof will be omitted.

As described above, the control unit 23 records the image information 64 generated by the image sensor 22 that is capable of setting imaging conditions for each of the unit groups 32, and the data related to the imaging conditions for each of the unit groups 32 (i.e. the imaging conditions information 61, the mask information 62, the Tv value map 65, the Sv value map 66, the Bv value map 67, and so on) upon the memory card 25 in mutual correspondence. The feature of difference from the first embodiment is that, while not being in the form of a single image file 40, the management data file 93, the video image file 401, and the still image file 402 recorded upon the memory card 25 are kept in mutual correspondence by the layout information 96 in the management data file 93.

With the image capturing device according to the second embodiment described above, similar beneficial effects to those of the first embodiment are obtained.

The following variations also come within the scope of the present invention, and it would also be possible to combine one or a plurality of these variations with one or more of the embodiments described above.

### - Variation #1 -

In the first embodiment, it was explained that the first image information 641 and the second image information 642 were created when the image file 40 is reproduced, but it would also be acceptable to arrange to record them in advance in the image file 40. To put this in another manner, it would also be acceptable to arrange to record, in a single image file 40, video image(s) and/or still image(s) that are recorded as separate files in separate sub-directories 94 for each large group 81 in the second embodiment. In this case, one frame of data recorded in the image file 40 would correspond to a single large group 81 respectively.

### - Variation #2 -

In the explanation of the first embodiment, it was stated that the image information 64 and the various types of map information are recorded, in the data section 42 of the image file 40 that is created by the video image capture function B or by the mixed image capture function, according to the arrangement of the unit groups 32 in the image sensor 22. However, it would also be possible for them to be recorded in a different arrangement from the arrangement of the unit groups 32. In the following, this point will be explained in detail.

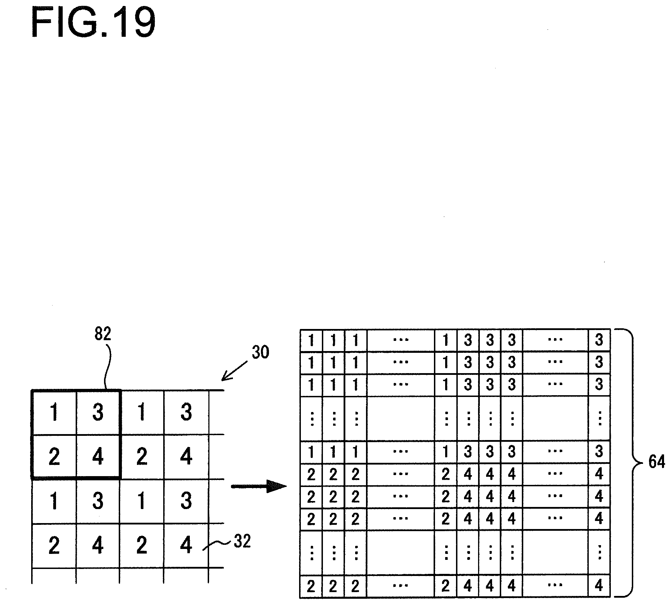

Fig. 19 is a figure for explanation of this Variation #2. Here, the unit groups 32 are classified into four large groups 81, in a similar manner to the case in Fig. 8(b). However, in the image information 64 that is subsequently created by the control unit 23, the image signals are not arranged according to the arrangement of the unit groups 32. In concrete terms, after the image signals have been collected together for each of the large groups 81, the image information 64 is generated by coupling those collected signals together. For example, if the image information 64 is divided into four regions in a 2×2 configuration, then the image signals from the unit groups 32 that belong to the first large group 81 may be collected into the region at the upper left, the image signals from the unit groups 32 that belong to the second large group 81 may be collected into the region at the lower left, the image signals from the unit groups 32 that belong to the third large group 81 may be collected into the region at the upper right, and the image signals from the unit groups 32 that belong to the fourth large group 81 may be collected into the region at the lower right.

It should be understood that, if the arrangement of the image signals in the image information 64 is changed as described above, then the arrangements of the Tv value map 65, of the Sv value map 66, of the mask information 62, and so on must also be changed to match.

In addition, it will also be acceptable to arrange to change the arrangement of the image information 64 by other methods than that described above. In other words, provided that the arrangement within the image information 64 and the arrangement within the information relating to other imaging conditions (such as the mask information 62 and so on) correspond to one another within the image file 40, this arrangement itself may be any arrangement.

### - Variation #3 -

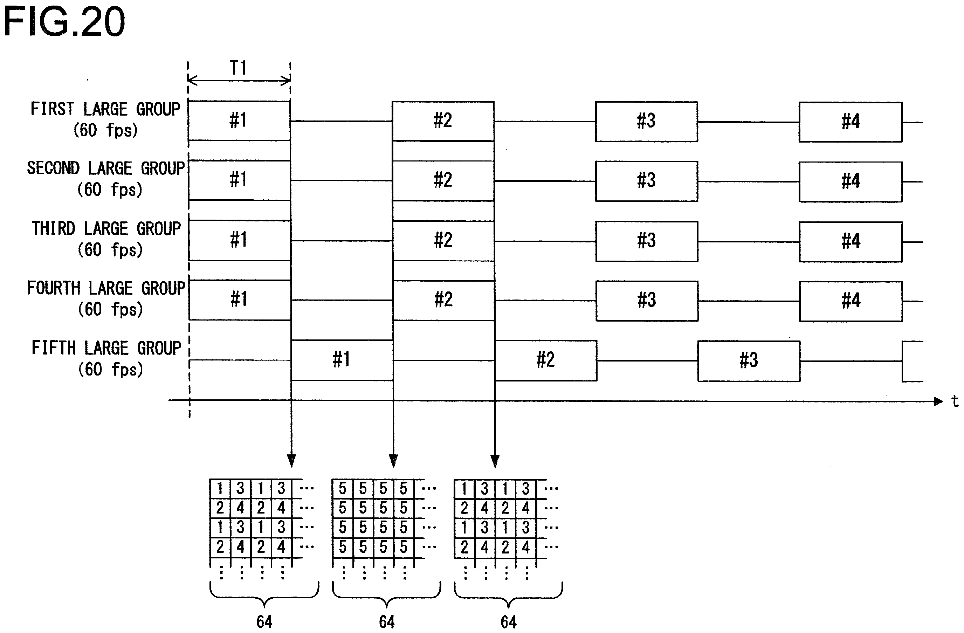

In the video image capture function B or the mixed image capture function, it would be acceptable to change the applications of the unit groups 32 for each frame. For example, as shown in Fig. 20, it may be arranged, in the odd numbered frames, to classify the unit groups 32 into first through fourth large groups 81, and to obtain image information 64 including the four sets of image information 641, 642, 643, and 644 whose imaging conditions are different. And, in the even numbered frames, it may be arranged to classify the unit groups 32 only into a fifth large group 81, so that only a single set of image information 64 is obtained. In other words, it will be acceptable to arrange for a plurality of images having relatively small number of pixels and whose imaging conditions are different, and a single image having a relatively large number of pixels, to be captured in time sharing manner. Moreover, this Variation #3 can also be applied to Variation #1 and to Variation #2 described above.

### - Variation #4 -

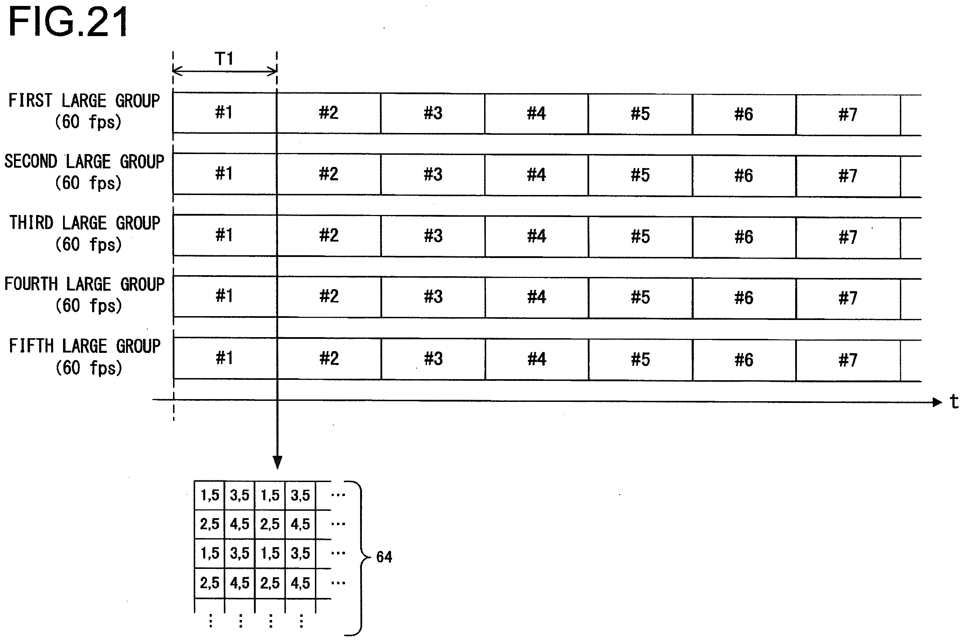

In the video image capture function B or the mixed image captur function, it would also be acceptable to arrange for a single unit group 32 to have a plurality of applications. For example, as shown in Fig. 21, it would be acceptable for the unit groups 32 to be classified into first through fourth large groups 81, and moreover for all of the unit groups 32 to be classified into a fifth large group 81. In this case, when reproduction (i.e. development or the like) of the image file 40 is performed according to the former classification, then image information including four sets of image information 641, 642, 643, and 644 is obtained; while, when reproduction (i.e. development or the like) of the image file 40 is performed according to the latter classification, then a single large set of image information having a greater number of pixels is obtained.

### - Variation #5 -

In the explanation of the still image capture function B, it was described that the unit group 32 to which the number "0" is allocated on the mask information 62 is not employed for image capturing, and that information related to those unit groups 32 is not included in the image information 64 recorded in the data section 42; but it would also be acceptable to arrange for the number "0" to have a similar meaning in the still image capture function A and/or in the video image capture function A as well.

Furthermore, in the mask information 62 of the header section 41, it would also be acceptable to arrange for the number "0" to specify not being used for image capturing. For example, in the still image capture function B or in the video image capture function B, when the entire captured screen image is divided into four 2×2 unit groups 32, and different applications are allocated to each of those four unit groups 32, then, if the number of unit groups 32 in the vertical direction (i.e. number of rows) is an odd number, a row with only one line will be left over. In this case, it will be acceptable to arrange not to use this leftover single row for image capturing, and to allocate the number "0" to this leftover single row in the mask information 62 recorded in the header section 41.

It should be understood that the number "0" mentioned above is only an example; it would also be acceptable to arrange to handle some other number in a similar way to this number "0".

### - Variation #6 -

The structure of the image file 40 may also be different from those in each of the embodiments described above. Moreover, the information related to imaging conditions recorded in the image file 40 may also be different from the information explained in connection with the first embodiment and so on. For example, it would be acceptable to arrange to omit recording some of the information, such as, for example, the Sv value map 66 or the like. Conversely, it would also be possible to arrange to add further information other than that described above. Furthermore, the recording format may also be different from those in the embodiments described above. For example, it would be acceptable to arrange for the Av value information 68 to be recorded as an Av value map in which the Av values for each of the unit groups 32 are arranged in a two dimensional manner, in a similar manner to the Tv values, the Sv values, and so on.

### - Variation #7 -

In each of the embodiments described above, the explanation has been made in terms of the image capturing device being a single electronic device that incorporates the image sensor 22 and the control unit 23, but the present invention is not to be considered as being limited to this type of embodiment. For example, the present invention could also be applied to an electronic device that controls an image sensor 22 that is provided externally. In the following, a form in which the image sensor 22 is provided externally will be described in detail.

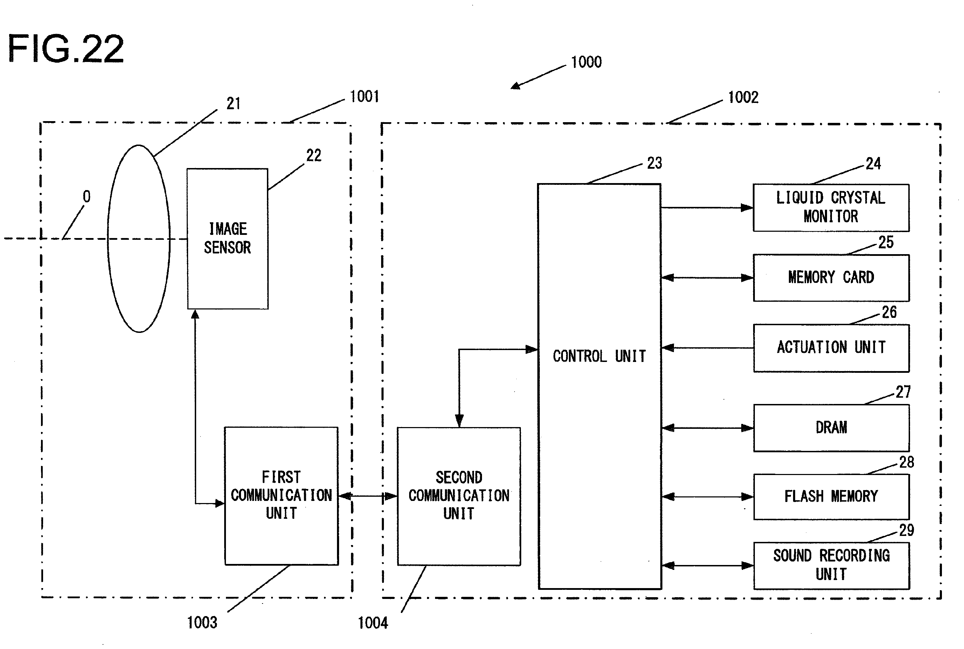

Fig. 22 is a schematic block diagram showing the structure of an image capturing system according to the Variation #7. The image capturing system 1000 shown in Fig. 22 comprises an image capturing unit 1001 and an electronic device 1002. The image capturing unit 1001 comprises an imaging optical system 21 and an image sensor 22 as explained in connection with the first embodiment, and further comprises a first communication unit 1003. Moreover, the electronic device 1002 comprises a control unit 23, a liquid crystal monitor 24, a memory card 25, an actuation unit 26, a DRAM 27, a flash memory 28, and a sound recording unit 29 as explained in connection with the first embodiment, and further comprises a second communication unit 1004. The first communication unit 1003 and the second communication unit 1004 are capable of performing mutual bidirectional data communication according to, for example, a per se known wireless communication technique or a per se known optical communication technique or the like. Furthermore, it would also be acceptable to provide a structure in which, by the image capturing unit 1001 and the electronic device 1002 being connected together by a cable or the like, the first communication unit 1003 and the second communication unit 1004 perform mutual bidirectional data communication by cable connection.

With the image capturing system 1000 according to the Variation #7, the control unit 23 performs control of the image sensor 22 by data communication via the second communication unit 1004 and the first communication unit 1003. For example, by predetermined control data being transmitted to and being received from the image capturing unit 1001, different imaging conditions may be set for each of the unit groups 32, and image signals may be read out from each of the unit groups 32.

As described above, in the image capturing system 1000, it is the control unit 23 that performs control of each of the unit groups 32. While the electronic device 1002 does not include the image sensor 22, it performs similar control to that in the case of the first embodiment by controlling the image sensor 22 (i.e. the image capturing unit 1001) that is provided externally to the electronic device 1002. In other words, the present invention can be applied to an electronic device that does not incorporate an image sensor 22.

### - Variation #8 -

Information that is different from the various types of information described above may also be further recorded in the data section 42. For example, it would also be acceptable to arrange to record information about the distance to the photographic subject, as measured by a per se known range finding technique, in the data section 42. Moreover, this distance information may also be a so-called depth map in which the distances to the photographic subject measured for each of the unit groups 32 are arranged in a two dimensional manner. And, as another example, it would also be possible to record information related to the state of the imaging optical system 21 (for example, the focal length or the like). Furthermore, it would also be acceptable to arrange to record information of this type for each frame, in consideration of the fact that such information may change during photography of a video image.

### - Variation #9 -

In each of the embodiments described above, explanation has been provided for an example in which the present invention is applied to a lens-integrated camera, but, for example, the present invention can also be applied to an interchangeable lens camera. Moreover, the present invention is not limited in its application to a camera; it could also be applied to any electronic device that is equipped with a camera, such as a PC, a portable telephone, a smart phone, a tablet, or the like.

It should be understood that a program according to any of the embodiments described above could be supplied as a computer-readable computer program product in various formats, such as a recording medium or a data signal (a carrier wave) or the like. Such a program could be supplied upon a recording medium such as a CD-ROM or the like, or via a data signal such as the internet or the like.

The present invention is not to be considered as being limited to the embodiments described above; provided that the specific characteristics of the present invention are not lost, other forms that are considered to come within the range of the technical concept of the present invention also are included within the range of the present invention.

The content of the disclosure of the following application, upon which priority is claimed, is hereby incorporated herein by reference:
Japanese Patent Application No. 2014-202286 (filed September 30, 2014).

### REFERENCE SIGNS LIST

10: image capturing device, 21: imaging optical system, 22: image sensor, 23: control unit, 24: liquid crystal monitor, 25: memory card, 26: actuation unit, 27: DRAM, 28: flash memory, 29: sound recording unit.

## Claims

1. An electronic device, comprising:
an input unit that inputs image data generated by an imaging unit that has a plurality of imaging regions with imaging conditions being different for each of the imaging regions, and data of the imaging conditions for each of the imaging regions; and
an image processing unit that performs image processing upon the image data inputted from the input unit based on the imaging conditions for each of the imaging regions.

2. The electronic device according to Claim 1, wherein
if, among the plurality of imaging regions, the imaging conditions for a first imaging region and the imaging conditions for a second imaging region are different, the image processing unit performs image processing of the image data generated from the first imaging region and image processing of the image data generated from the second imaging region differently.

3. The electronic device according to Claim 2, wherein
the image processing unit makes parameters for the image processing of the image data generated from the first imaging region and parameters for the image processing of the image data generated from the second imaging region be different.

4. The electronic device according any one of Claims 1 through 3, wherein:
the image data generated by the imaging unit and the data of the imaging conditions for each imaging region are recorded by a recording unit; and
the input unit inputs the image data and the data of the imaging conditions for each imaging region from the recording unit.

5. An electronic device, comprising:
an input unit that, from a recording unit in which image data generated by an imaging unit that has a plurality of imaging regions with imaging conditions being different for each of the imaging regions, and data of imaging conditions set for each of the imaging regions, are recorded in correspondence with data of position information for each of the imaging regions of the imaging unit, inputs the image data and the data of the imaging conditions for each imaging region; and
an image processing unit that performs image processing upon the image data inputted from the input unit under the imaging conditions for each of the imaging regions.

6. An electronic device, comprising:
an input unit that, from a recording unit in which image data generated by an imaging unit that has a plurality of imaging regions with imaging conditions being different for each of the imaging regions, and data of the imaging conditions set for each of the imaging regions, are recorded in a configuration corresponding to data of position information for each of the imaging regions of the imaging unit, inputs the image data and the data of the imaging conditions set for each of the imaging regions; and
an image processing unit that performs image processing upon the image data of the imaging regions inputted from the input unit under the imaging conditions for each of the imaging regions.

7. The electronic device according to any one of Claims 1 through 6, wherein
the image processing unit performs at least one of demosaicing processing, noise reduction processing, color adjustment processing, and brightness adjustment processing.

8. The electronic device according to Claim 7, wherein:
the imaging unit includes an amplification unit for each imaging region, that amplifies signal generated by electric charge that has been generated by photoelectric conversion;
the imaging conditions are amplification ratios of the amplification units; and
the image processing unit performs noise alleviation processing based on the amplification ratios.

9. The electronic device according to any one of Claims 1 through 8, wherein:
the imaging regions have pixel groups that include at least one pixel, and imaging conditions can be set for each pixel group;
the data of the imaging conditions inputted from the input unit is data of the imaging conditions for each pixel group; and
the image processing unit performs image processing of the image data according to the data of the imaging conditions for each pixel group as imaging conditions for each imaging region.

10. The electronic device according to Claim 1, wherein:
the image data is RAW data; and
the image processing unit develops the RAW data based on the imaging conditions for each imaging region.

11. The electronic device according to Claim 10, wherein
the image processing unit develops the RAW data based on a distribution diagram of imaging conditions that specifies the imaging conditions for each imaging region.

12. The electronic device according to Claim 10, wherein
the image processing unit develops the RAW data based on a correction amount map generated based on a distribution diagram of the imaging conditions.

13. The electronic device according to Claim 12,
further comprising a generation unit that generates the correction amount map based on the distribution diagram of the imaging conditions.

14. The electronic device according to any one of Claims 10 through 13, wherein
the RAW data is corrected so as to be a predetermined range recording is performed.

15. The electronic device according to Claim 14, wherein
the RAW data is corrected based on the predetermined range.

16. The electronic device according to Claim 13,
further comprising a measurement unit that measures the imaging conditions for each of the plurality of imaging regions; and wherein,
as the correction amount map, the generation unit generates a calculated correction amount map so that, at least one measured value, among the imaging conditions measured by the measurement unit for the plurality of imaging regions, is within a predetermined range.

17. The electronic device according to any one of Claims 1 through 16, wherein
the data of the imaging conditions includes information related to exposure when an image of the photographic subject is captured by the imaging unit.

18. The electronic device according to any one of Claims 1 through 17, wherein
the data of the imaging conditions includes information related to brightness of the photographic captured by the imaging unit.

19. The electronic device according to any one of Claims 1 through 17, wherein
the data of the imaging conditions includes information related to movement of the imaging unit during image capturing.

20. The electronic device according to any one of Claims 1 through 19, wherein
the imaging condition data includes information related to luminance of the photographic subject captured by the imaging unit.

21. The electronic device according to any one of Claims 1 through 20, wherein:
the imaging regions include photoelectric conversion sections that accumulate electric charge that has been generated by photoelectric conversion; and
the data of the imaging conditions includes the time periods for electric charge accumulation by the photoelectric conversion sections.

22. The electronic device according to any one of Claims 1 through 21, wherein:
the imaging unit includes, for each imaging region, an amplification unit that amplifies the signal generated by electric charge that has been photoelectrically converted; and
the data of the imaging conditions includes the amplification ratios of the amplification units.

23. An image processing method, comprising:
inputting image data generated by an imaging unit that has a plurality of imaging regions with imaging conditions being different for each of the imaging regions, and data of the imaging conditions for each of the imaging regions; and
performing image processing upon the inputted image data under the imaging conditions for each of the imaging regions.

24. An image processing method, comprising:
inputting image data generated by an imaging unit that has pixel groups including at least one pixel with imaging conditions being different for each of the pixel groups, and the data of the imaging conditions for each of the pixel groups; and
performing image processing upon the inputted image data under the imaging conditions for each of the pixel groups.
